# EUROPÄISCHE PATENTSCHRIFT

(11) **EP 3 362 263 B1**
(45) Veröffentlichungstag und Bekanntmachung des Hinweises auf die Patenterteilung: **13.05.2020**
(21) Anmeldenummer: 16805754.5
(22) Anmeldetag: 25.11.2016
(51) Int. Cl.: B29C 67/00, B22F 3/105, B33Y 10/00, B33Y 30/00, B33Y 50/00, B33Y 50/02

(54) **VERFAHREN UND VORRICHTUNG ZUR AUFBAUMATERIALBEDARFSERMITTLUNG**
METHOD AND DEVICE FOR ASCERTAINING REQUIRED CONSTRUCTION MATERIAL
PROCÉDÉ ET DISPOSITIF DE DÉTERMINATION DES BESOINS EN MATIÈRE DE CONSTRUCTION

(30) Priorität: 30.11.2015 DE 102015223719
(43) Veröffentlichungstag der Anmeldung: 22.08.2018
(73) Patentinhaber: EOS GmbH Electro Optical Systems, 82152 Krailling (DE)
(72) Erfinder: FROHNMAIER, Markus, 94491 Hengersberg (DE); PUTZ, Oliver, 80638 München (DE)
(74) Vertreter: Prüfer & Partner mbB Patentanwälte · Rechtsanwälte
(86) Internationale Anmeldenummer: PCT/EP2016/078814
(87) Internationale Veröffentlichungsnummer: WO 2017/093136

(56) Entgegenhaltungen:
- WO-A1-2015/152875
- US-A1- 2010 090 374
- US-A1- 2011 190 446

## Beschreibung

Die vorliegende Erfindung bezieht sich auf ein Verfahren und eine Bereitstellungseinheit zur Bereitstellung einer Aufbaumaterialverbrauchsinformation im Rahmen einer Herstellung mindestens eines dreidimensionalen Objekts mittels einer generativen Schichtbauvorrichtung sowie auf eine Verfahren zur Bereitstellung eines Steuerbefehlssatzes für eine generative Schichtbauvorrichtung, der unter Berücksichtigung der Aufbaumaterialverbrauchsinformation erzeugt wird, sowie eine generative Schichtbauvorrichtung und ein entsprechendes Verfahren zur Herstellung mindestens eines dreidimensionalen Objektes mittels einer generativen Schichtbauvorrichtung. Insbesondere bezieht sich die vorliegende Erfindung auf Vorrichtungen und Verfahren, in denen das Aufbaumaterial in Pulverform vorliegt.

DE 10 2011 121 568 A1 beschreibt ein generatives Schichtbauverfahren, bei dem ein pulverförmiges Metallmaterial mittels elektromagnetischer Strahlung oder Elektronenstrahlung selektiv verfestigt wird. Hierbei wird eine Baumaterialschicht in einer Baukammer auf einem höhenverfahrbaren Träger aufgetragen und selektiv verfestigt. Dieser Vorgang wird durch wiederholtes Auftragen und Verfestigen von Schichten solange fortgeführt, bis durch die selektive Verfestigung der aufeinandergestapelten Schichten das dreidimensionale Objekt fertiggestellt wurde.

Insbesondere widmet sich DE 10 2011 121 568 A1 dem Problem, dass der Pulverauftrag normalerweise immer über der gesamten Fläche der vorhandenen Baukammer stattfindet. Dies führt zum Einen zu einem verlängerten Herstellungszeitraum, weil eine großflächige Schicht aufgetragen wird, selbst wenn nur ein kleiner Bruchteil dieser Schicht tatsächlich verfestigt wird. Weiterhin gibt es auch den Nachteil, dass große Pulvermengen verbraucht werden, obwohl nur ein Bruchteil des Pulvers tatsächlich verfestigt wird.

WO 2015/152875 A1 beschreibt eine Vorrichtung und ein Verfahren zur Bestimmung einer Volumenänderung beim Verfestigen einer Schicht sowie die Erhöhung der Pulvermaterialzufuhr in der nachfolgenden Schicht auf der Grundlage der ermittelten Volumenänderung.

US 2010/0090374 A1 beschreibt ein Lasersintersystem, bei dem die Gestalt der Bauplattform an den Querschnitt des herzustellenden Objekts angepasst werden kann.

Ein hoher Pulververbrauch ist aus mehreren Gründen von Nachteil. Sieht man einmal von den dadurch entstehenden höheren Baumaterialkosten ab, so gibt es auch den Nachteil, dass weitere Ressourcen, beispielsweise die Pulverhandhabungssysteme (Siebe, Fördersysteme) durch den häufigeren Gebrauch einem erhöhten Verschleiß ausgesetzt sind. Insbesondere wenn sehr hohe Objekte gebaut werden, kann durch notwendig werdende Pulvernachfüllvorgänge die Bauzeit verlängert werden. Im Extremfall ist die Bauhöhe der herzustellenden Objekte begrenzt, falls ein Pulvernachfüllvorgang unzweckmäßig ist. Eine Wiederverwendung von unverfestigtem Pulver, das bereits einmal in einer Vorrichtung zur generativen schichtweisen Fertigung verwendet wurde, birgt den Nachteil, dass das Pulver in der Vorrichtung altert.

Zur Lösung der genannten Probleme schlägt DE 10 2011121 568 A1 vor, innerhalb der Baukammer eine Bauzelle aufzubauen, die das zu bauende Objekt eng umgibt. Insbesondere wird die Bauzellenwandung aus dem für den Bauvorgang verwendeten Aufbaumaterial durch selektive Verfestigung sukzessive aufgebaut. Dies macht es möglich, die Lage der Bauzellenwandung von Schicht zu Schicht zu variieren und an den jeweiligen Objektquerschnitt in einer Schicht anzupassen.

Auch wenn das in DE 10 2011 121 568 A1 beschriebene Verfahren sicherlich zu einer Pulvereinsparung führen kann, so führt das Vorhandensein von zusätzlichen Wandungen aus dem verfestigten Baumaterial dazu, dass der Auspackvorgang für die fertiggestellten Objekte (das Befreien der Objekte von dem sie umgebenden unverfestigten Pulver) erschwert wird. Die Aufgabe der vorliegenden Erfindung ist es daher, ein Verfahren und eine Vorrichtung bereitzustellen, die eine alternative Optimierung der Pulverdosierung erlauben.

Die Aufgabe wird gelöst durch ein Verfahren nach Anspruch 1 bzw. Anspruch 11, ein Verfahren zur Herstellung mindestens eines dreidimensionalen Objekts mittels einer generativen Schichtbauvorrichtung nach Anspruch 12, eine Bereitstellungseinheit zur Bereitstellung einer Aufbaumaterialverbrauchsinformation nach Anspruch 13, eine generative Schichtbauvorrichtung nach Anspruch 14 und ein Computerprogramm nach Anspruch 15. Weiterbildungen der Erfindung sind in den abhängigen Ansprüchen beschrieben. Dabei können die Verfahren und das Computerprogramm auch durch die untenstehenden bzw. in den Unteransprüchen ausgeführten Merkmale der Vorrichtungen weitergebildet sein und umgekehrt.

Erfindungsgemäß wird ein Verfahren zur Bereitstellung einer Aufbaumaterialverbrauchsinformation im Rahmen einer Herstellung mindestens eines dreidimensionalen Objekts mittels einer generativen Schichtbauvorrichtung bereitgestellt. Dabei wird in der generativen Schichtbauvorrichtung das mindestens eine Objekt Schicht für Schicht hergestellt durch schichtweises Auftragen einer Schicht eines pulverförmigen Aufbaumaterials mittels eines Beschichters auf einen Träger oder eine bereits vorhandene Schicht des Aufbaumaterials und stellenweises Verfestigen des Aufbaumaterials mittels Wärmezufuhr zu den Stellen der Schicht, die dem Querschnitt eines Objekts entsprechen, indem die Schicht selektiv mit Energiestrahlung abgetastet wird. Das erfindungsgemäße Verfahren weist dabei mindestens die folgenden Schritte auf:
Einen Schritt des Zugreifens auf die Daten einer aufzutragenden Schicht in einem ersten Datensatz, in dem für jede während der Herstellung aufzutragende Schicht gekennzeichnet ist, ob in dieser Schicht eine selektive Verfestigung von Aufbaumaterial stattfinden soll und, falls dies der Fall ist, an welchen Stellen in dieser Schicht Aufbaumaterial verfestigt werden soll, einen Schritt des Unterteilens der Fläche der aufzutragenden Schicht in Teilbereiche, einen Schritt des Zuordnens von Wichtungsfaktoren zu den Teilbereichen und einen Schritt des Festlegens einer dem Beschichter zuzuführenden Menge des Aufbaumaterials für den Auftrag der Schicht. Insbesondere wird die Menge des Aufbaumaterials anhand der einzelnen Teilbereichen zugeordneten Wichtungsfaktoren ermittelt und als Aufbaumaterialverbrauchsinformation bereitgestellt.

Durch das erfindungsgemäße Vorgehen wird berücksichtigt, dass der Aufbaumaterialbedarf an unterschiedlichen Stellen unterschiedlich sein kann: Ist beispielsweise das von der Baukammer bzw. Prozesskammer seitlich begrenzte Baufeld kreisförmig, jedoch der das Baufeld überfahrende Beschichter rechteckig, so wird am Rand des Beschichters, also dort wo das vom Beschichter überfahrene Baufeld eine geringe Ausdehnung in Verfahrrichtung des Beschichters hat, weniger Aufbaumaterial benötigt als in der Mitte. Das erfindungsgemäße Vorgehen kann dabei gerade in den Fällen auf genaue Weise den Aufbaumaterialbedarf ermitteln, in denen die Aufbaumaterialmenge sehr knapp bemessen ist, so dass der Gefahr begegnet wird, dass das Aufbaumaterial beim Schichtauftrag vorzeitig zur Neige gehen könnte. Von der Mitte des Beschichters (senkrecht zur Bewegungsrichtung desselben) beim Schichtauftrag überstrichene Teilbereiche einer aufzutragenden Schicht würden im genannten Fall beispielsweise mit einem höheren Wichtungsfaktor versehen, um sicher zu stellen, dass die Aufbaumaterialmenge zumindest so groß ist, dass in diesen Teilbereichen eine vollständige Beschichtung ermöglicht wird. Vom Rand des Beschichters (senkrecht zur Bewegungsrichtung desselben) beim Schichtauftrag überstrichene Teilbereiche würden dagegen mit einem niedrigeren Wichtungsfaktor versehen, da dort ein unzureichender Pulverschichtauftrag nicht so gravierende Auswirkungen hätte.

Die erfindungsgemäße Bereitstellung der Aufbaumaterialverbrauchsinformation ermöglicht es, das Aufbaumaterial für ein Herstellungsverfahren möglichst sparsam zu dosieren, was zu Kosteneinsparungen führt. Weiterhin können gegebenenfalls bereits vor Beginn eines Herstellungsvorgangs lnformationen über den voraussichtlich während des Herstellungsvorgangs benötigen Gesamtaufbaumaterialbedarf bereitgestellt werden (der Gesamtaufbaumaterialbedarf wird aus dem Aufbaumaterialbedarf für alle Schichten ermittelt). Mittels dieser Informationen können dann gegebenenfalls die herzustellenden Objekte anders innerhalb des Baufelds angeordnet werden oder eine andere Gestalt für das Baufeld gewählt werden, um die für die Herstellung des gewünschten Objekts erforderliche Aufbaumaterialmenge möglichst gering zu halten. Im Grunde kann das Verfahren die Aufbaumaterialverbrauchsinformation bereits zu einem so frühen Zeitpunkt liefern, dass aufgrund dieser Information entschieden werden könnte, den Bauvorgang zur Minimierung des Aufbaumaterialverbrauchs gegebenenfalls auf einer anders dimensionierten Schichtbauvorrichtung ablaufen zu lassen als der ursprünglich dafür vorgesehenen. Zusammenfassend kann man feststellen, dass aufgrund der erfindungsgemäß bereitgestellten sehr genauen Aufbaumaterialverbrauchsinformation(en) ein Optimierungspotenzial realisierbar wird, das beispielsweise durch geeignete Maßnahmen hinsichtlich Anordnung und/oder Ausgestaltung von hergestellten Objekten auf einem Baufeld und/oder Ausgestaltung des Baufelds selbst genutzt werden kann.

Bevorzugt wird die Menge des Aufbaumaterials in Abhängigkeit von einer Summe der Wichtungsfaktoren über alle Teilbereiche festgelegt. Wird in diesem Fall die einem mit dem Wichtungsfaktor 1 versehenen Teilbereich zuzuführende Aufbaumaterialmenge als Normaufbaumaterialmenge angesehen, so kann die insgesamt für einen Schichtauftrag benötigte Aufbaumaterialmenge auf einfache Weise durch Summation der Wichtungsfaktoren über alle Teilbereiche und nachfolgende Multiplikation mit der Normauftragsmaterialmenge ermittelt werden. Mit den einzelnen Wichtungsfaktoren kann dabei auch unterschiedlichen Größen der Teilbereiche Rechnung getragen werden.

Weiter bevorzugt decken die Teilbereiche die Fläche der aufzutragenden Schicht in Form einer Matrix mit Zeilen und Spalten ab. So kann auf sehr einfache Weise einem unterschiedlichen Aufbaumaterialbedarf parallel zur Beschichtungsrichtung und senkrecht zu dieser Rechnung getragen werden. Hierdurch entstehen Teilbereiche in Form von durch die Zeilen und Spalten definierten Zellen bzw. (vergrößerten) Pixeln, die je einzeln mithilfe der Wichtungsfaktoren gewichtet werden können.

Bevorzugt werden die den Teilbereichen zugeordneten Wichtungsfaktoren in Bewegungsrichtung des Beschichters monoton, bevorzugt streng monoton, zunehmend zugeordnet. Die Erfinder haben dabei erkannt, dass, wenn das Aufbaumaterial im Beschichter zur Neige geht, dies nicht abrupt geschehen muss, sondern allmählich vonstatten gehen kann. Mit anderen Worten, ein zur Neige gehender Aufbaumaterialvorrat im Beschichter während eines Schichtauftrags kann dazu führen, dass gegen Ende des Beschichtungsvorgangs die vorbestimmte Auftragsschichtdicke mehr und mehr unterschritten wird. Liegt ein Bauteil in einem Bereich des Baufeldes der zu Beginn des Beschichtungsvorgangs überfahren wird, ist somit die Gefahr eines unzureichenden Schichtauftrags für solch ein Bauteil geringer als in einem Bereich des Baufeldes, der erst gegen Ende des Beschichtungsvorgangs beschichtet wird. Wenn daher ein Bauteil in einem Bereich des Baufeldes liegt, der erst gegen Ende des Beschichtungsvorgangs beschichtet wird, so ist hierfür die zu bevorratende Aufbaumaterialmenge für einen Schichtauftrag größer zu bemessen. Dies kann dadurch berücksichtigt werden, dass den während eines Beschichtungsvorgangs vom Beschichter zu einem späteren Zeitpunkt überfahrenen Teilbereichen der Schicht ein höherer Wichtungsfaktor zugewiesen wird.

Bei einer Variante des erfindungsgemäßen Verfahrens wird die Lage und Form von zu verfestigenden Bereichen in mindestens einer vorangehenden Schicht, bevorzugt der unmittelbar vorangehenden Schicht ermittelt und, wenn es in mindestens einer vorangehenden Schicht, bevorzugt der unmittelbar vorangehenden Schicht, einen verfestigten Bereich gibt, jenen Teilbereichen der aufzutragenden Schicht, die zumindest teilweise oberhalb eines zu verfestigenden Bereichs liegen, ein höherer Wichtungsfaktor zugeordnet als es der Fall wäre, wenn der Teilbereich nicht zumindest teilweise oberhalb eines zu verfestigenden Bereichs liegen würde.

Durch diese Variante des erfindungsgemäßen Verfahrens wird bei der Aufbaumaterialbedarfsermittlung für eine Schicht berücksichtigt, dass zusätzlich zur nötigen Aufbaumaterialmenge für den Auftrag einer Schicht mit einer vorgegebenen Dicke eine Zusatzmenge an Aufbaumaterial benötigt wird, welche zum Ausgleich von Einsenkungen in der unmittelbar vorangegangenen Aufbaumaterialschicht dienen. Einsenkungen in der unmittelbar vorangegangenen Aufbaumaterialschicht resultieren aus der der Verdichtung des Aufbaumaterials an den verfestigten Stellen in der unmittelbar vorangegangenen Schicht oder in darunterliegenden Schichten. Bei dem erfindungsgemäßen Vorgehen kann auch die Lage eines verfestigten Bereichs berücksichtigt werden. Je nach dem Ort dieses verfestigten Bereichs kann nämlich der Aufbaumaterialbedarf unterschiedlich sein. Wenn beispielsweise der verfestigte Bereich erst gegen Ende des Beschichtungsvorgangs beschichtet wird, dann ist es umso wichtiger, genügend Zusatzaufbaumaterial für diesen Bereich vorrätig zu halten, damit an dieser Stelle genügend Aufbaumaterial für die Auftragung mit der vorgegebenen Schichtdicke zur Verfügung steht.

Bei einer Abwandlung der soeben beschriebenen Variante des erfindungsgemäßen Verfahrens werden die Teilbereiche so angeordnet, dass sie die Fläche der aufzutragenden Schicht in parallel zur Bewegungsrichtung des Beschichters verlaufende Zeilen und senkrecht dazu verlaufende Spalten unterteilen, wobei zunächst in jeder Zeile die Summe der Wichtungsfaktoren über alle Teilbereiche in dieser Zeile berechnet wird und nachfolgend die Zeile ermittelt wird, für die die Summe maximal ist. Anschließend wird allen Teilbereichen in einer Spalte der Wert des Wichtungsfaktors jenes Teilbereichs in dieser Spalte zugeordnet, der in der Zeile mit der maximalen Summe liegt. Bei diesem Vorgehen wird somit zunächst die Zeile mit dem maximalen Aufbaumaterialbedarf ermittelt und anschließend die benötigte Aufbaumaterialmenge unter der Annahme festgelegt, auch in allen anderen Zeilen würde diese Maximalmenge benötigt. Zwar wird solch ein Vorgehen zu einem ermittelten Aufbaumaterialbedarf führen, der geringfügig zu hoch ist, jedoch sichert man sich durch solch ein Vorgehen gegen unvorhergesehene Aufbaumaterialverluste oder unbeabsichtigte Aufbaumaterialverluste während eines Schichtauftrags ab.

Bei einer weiteren Abwandlung der beschriebenen Variante des erfindungsgemäßen Verfahrens wird die Lage und Form von verfestigten Bereichen in mindestens einer vorangehenden Schicht, bevorzugt der unmittelbar vorangehenden Schicht, in Bezug auf einen Zustand nach ihrer Verfestigung mit Energiestrahlung simuliert und für die Zuordnung von Wichtungsfaktoren zu Teilbereichen berücksichtigt, ob ein Teilbereich zumindest teilweise oberhalb eines von der Simulation gelieferten verfestigten Bereichs liegt. Solch ein Vorgehen ermöglicht eine noch genauere Ermittlung des Aufbaumaterialbedarfs, da berücksichtigt wird, dass die Ausdehnung eines zu verfestigenden Bereichs in einer Schicht von der tatsächlichen Ausdehnung eines Bereichs nach dessen Verfestigung infolge der Art und Weise des Verfestigungsvorgangs abweichen kann. Bei der Simulation der Ausdehnung des verfestigten Bereichs können dabei erfindungsgemäß gegebenenfalls auch Volumenschwundvorgänge infolge des Verfestigungsvorgangs des Aufbaumaterials simuliert werden.

Bei der Simulation von Lage und Form von verfestigten Bereichen in mindestens einer vorangehenden Schicht, bevorzugt der unmittelbar vorangehenden Schicht in Bezug auf einen Zustand nach ihrer Verfestigung wird bevorzugt ein Bild eines verfestigten Bereichs errechnet. Dadurch kann die Ausdehnung eines verfestigten Bereichs in besonders genauer Weise ermittelt werden.

Bevorzugt sind die Teilbereiche parallel zur Bewegungsrichtung des Beschichters entlang der gesamten aufzutragenden Schicht verlaufende Streifen. Dadurch ist die Zuordnung von Wichtungsfaktoren vereinfacht, da nur jedem Streifen ein Wichtungsfaktor zugeordnet wird. Auf diese Weise kann insbesondere die Ausdehnung des nach dem Schichtauftrag zu verfestigenden Bereichs in Beschichtungsrichtung und/oder die Ausdehnung eines bereits verfestigten Bereichs in vorangegangenen Schichten in Beschichtungsrichtung für die Zuordnung des Wichtungsfaktors zugrunde gelegt werden.

Bevorzugt wird bei der Zuordnung von Werten der Wichtungsfaktoren zu den Teilbereichen die Art des verwendeten Aufbaumaterials berücksichtigt. Der Grund ist, dass der Einfluss von Lage und Orientierung von bereits verfestigten Bereichen oder nach einem Schichtauftrag noch zu verfestigenden Bereichen in aller Regel für unterschiedliche Pulvermaterialen unterschiedlich sein wird. Gemäß dem soeben beschriebenen Vorgehen wird bei der Zuordnung von Wichtungsfaktoren automatisch dieser Umstand berücksichtigt.

Ein erfindungsgemäßes Verfahren zur Bereitstellung eines Steuerbefehlssatzes zur Herstellung mindestens eines dreidimensionalen Objekts mittels einer generativen Schichtbauvorrichtung, wobei in der generativen Schichtbauvorrichtung das mindestens eine Objekt Schicht für Schicht hergestellt wird durch schichtweises Auftragen einer Schicht eines pulverförmigen Aufbaumaterials mittels eines Beschichters auf einen Träger oder eine bereits vorhandene Schicht des Aufbaumaterials und stellenweises Verfestigen des Aufbaumaterials mittels Wärmezufuhr zu den Stellen der Schicht, die dem Querschnitt eines Objekts entsprechen, indem die Schicht selektiv mit Energiestrahlung abgetastet wird, weist mindestens die folgenden Schritte auf:
Neben der Bereitstellung der Aufbaumaterialverbrauchsinformation mittels des oben beschriebenen erfindungsgemäßen Verfahrens wird ein Steuerbefehlssatz für die generative Schichtbauvorrichtung erzeugt, wobei in dem Steuerbefehlssatz für mindestens eine, bevorzugt mehrere, besonders bevorzugt jede aufzutragende Schicht die dem Beschichter für den Auftrag dieser Schicht zuzuführende Aufbaumaterialmenge festgelegt ist.

Bei dem soeben beschriebenen Verfahren kann somit ein Steuerbefehlssatz für eine generative Schichtbauvorrichtung erhalten werden, der automatisch und sehr präzise den Aufbaumaterialbedarf für den Auftrag einer Schicht ermittelt und die generative Schichtbauvorrichtung entsprechend ansteuert.

Bei einem erfindungsgemäßen Verfahren wird mindestens ein dreidimensionales Objekt mittels einer generativen Schichtbauvorrichtung hergestellt, die durch einen mit dem erfindungsgemäßen Verfahren erzeugten Steuerbefehlssatz gesteuert wird, wobei in der generativen Schichtbauvorrichtung das mindestens eine Objekt Schicht für Schicht hergestellt wird durch schichtweises Auftragen einer Schicht eines pulverförmigen Aufbaumaterials mittels eines Beschichters auf einen Träger oder eine bereits vorhandene Schicht des Aufbaumaterials und stellenweises Verfestigen des Aufbaumaterials mittels Wärmezufuhr zu den Stellen der Schicht, die dem Querschnitt eines Objekts entsprechen, indem die Schicht selektiv mit Energiestrahlung abgetastet wird und das Verfahren mindestens die folgenden Schritte aufweist:
einen Pulverauftragsschritt des Bereitstellens einer Schicht eines pulverförmigen Aufbaumaterials auf einer Bauunterlage oder einer bereits vorhandenen Schicht des pulverförmigen Aufbaumaterials,
einen Verfestigungsschritt des Verfestigens der aufgetragenen Schicht mittels elektromagnetischer Strahlung oder Teilchenstrahlung, bei dem die Strahlung auf alle zu verfestigenden Stellen der Schicht einwirkt, so dass die Pulverkörner an diesen Stellen durch die durch die Strahlung eingebrachte Wärmeenergie teilweise oder vollständig aufgeschmolzen werden, so dass sie nach einer Abkühlung miteinander verbunden als Festkörper vorliegen,
wobei der Pulverauftragsschritt und der Verfestigungsschritt nacheinander so oft wiederholt werden, bis alle Querschnitte des mindestens einen herzustellenden dreidimensionalen Objekts verfestigt sind. Ein soeben geschildertes Verfahren zur Herstellung von Objekten mittels einer generativen Schichtbauvorrichtung kann auf besonders effektive Weise das zur Verfügung stehende Aufbaumaterial einsetzen. Durch die Sparsamkeit beim Einsatz des Aufbaumaterials können letztendlich die Kosten für die Herstellung von Objekten gesenkt werden.

Eine erfindungsgemäße Bereitstellungseinheit zur Bereitstellung einer Aufbaumaterialverbrauchsinformation im Rahmen einer Herstellung mindestens eines dreidimensionalen Objekts mittels einer generativen Schichtbauvorrichtung, wobei in der generativen Schichtbauvorrichtung das mindestens eine Objekt Schicht für Schicht hergestellt wird durch schichtweises Auftragen einer Schicht eines pulverförmigen Aufbaumaterials mittels eines Beschichters auf einen Träger oder eine bereits vorhandene Schicht des Aufbaumaterials und stellenweises Verfestigen des Aufbaumaterials mittels Wärmezufuhr zu den Stellen der Schicht, die dem Querschnitt eines Objekts entsprechen, indem die Schicht selektiv mit Energiestrahlung abgetastet wird, weist mindestens auf:
eine Zugriffseinheit, ausgebildet zum Zugreifen auf die Daten einer aufzutragenden Schicht in einem ersten Datensatz, in dem für jede während der Herstellung aufzutragende Schicht gekennzeichnet ist, ob in dieser Schicht eine selektive Verfestigung von Aufbaumaterial stattfinden soll und, falls dies der Fall ist, an welchen Stellen in dieser Schicht Aufbaumaterial verfestigt werden soll,
eine Unterteilungseinheit, die im Betrieb die Fläche der aufzutragenden Schicht in Teilbereiche unterteilt,
eine Zuordnungseinheit, die im Betrieb Wichtungsfaktoren zu den Teilbereichen zuordnet,
eine Festlegungseinheit zum Festlegen einer dem Beschichter zuzuführenden Menge des Aufbaumaterials für den Auftrag der Schicht,
wobei die Bereitstellungseinheit ausgebildet ist, die Menge des Aufbaumaterials anhand der einzelnen Teilbereichen zugeordneten Wichtungsfaktoren zu ermitteln und als Aufbaumaterialverbrauchsinformation bereit zu stellen

Die Bereitstellungseinheit kann als separate Einheit realisiert, aber auch in eine generative Schichtbauvorrichtung integriert sein. In der Bereitstellungseinheit enthaltene Schnittstellen müssen nicht zwangsläufig als Hardware-Komponenten ausgebildet sein, sondern können auch als Software-Module realisiert sein, beispielsweise wenn Informationen bzw. Daten an eine nächste Komponente der Bereitstellungseinheit bzw. an eine externe Komponente nur softwaremäßig übergeben werden müssen. Ebenso können die Schnittstellen aus Hardware- und Software-Komponenten bestehen, wie zum Beispiel eine Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle zusammengefasst sein.

Insgesamt können ein Großteil der Komponenten zur Realisierung der Bereitstellungseinheit in der erfindungsgemäßen Weise, insbesondere die Zugriffseinheit, die Unterteilungseinheit, die Zuordnungseinheit und die Festlegungseinheit ganz oder teilweise in Form von Software-Modulen auf einem Prozessor realisiert werden.

Eine erfindungsgemäße Bereitstellungseinheit ermöglicht die Aufbaumaterialbedarfsermittlung abseits einer generativen Schichtbauvorrichtung, auf welcher der Bauvorgang letztendlich ablaufen soll. Die Bereitstellungseinheit kann dadurch beispielsweise bereits im Entwurfsstadium von Objekten verwendet werden, um die Herstellungskosten eines Objekts zu ermitteln, welche unter anderem vom für einen Bauvorgang erforderlichen Pulverbedarf abhängen.

Eine erfindungsgemäße generative Schichtbauvorrichtung zur Herstellung mindestens eines dreidimensionalen Objektes aus einem pulverförmigen Aufbaumaterial Schicht für Schicht durch schichtweises Auftragen einer Schicht eines pulverförmigen Aufbaumaterials mittels eines Beschichters auf einen Träger oder eine bereits vorhandene Schicht des Aufbaumaterials und stellenweises Verfestigen des Aufbaumaterials mittels Wärmezufuhr zu den Stellen der Schicht, die dem Querschnitt eines Objekts entsprechen, indem die Schicht selektiv mit Energiestrahlung abgetastet wird, weist auf:
einen Träger zum Tragen des zu bildenden Objektes;
eine Auftragsvorrichtung zum Aufbringen einer Schicht des pulverförmigen Aufbaumaterials auf die Oberfläche des Trägers oder eine bereits vorhandene Schicht,
eine Bestrahlungsvorrichtung, die elektromagnetische Strahlung oder Teilchenstrahlung emittiert und in der Lage ist, alle in einer Schicht zu verfestigenden Stellen so zu bestrahlen, dass die Pulverkörner an diesen Stellen durch die durch die Strahlung eingebrachte Wärmeenergie teilweise oder vollständig aufgeschmolzen werden, so dass sie nach einer Abkühlung miteinander verbunden als Festkörper vorliegen, wobei die Schichtbauvorrichtung eine erfindungsgemäße Bereitstellungseinheit umfasst und/oder mit solch einer Bereitstellungseinheit signaltechnisch verbunden ist. Damit ermöglicht eine erfindungsgemäße generative Schichtbauvorrichtung die Durchführung von Herstellungsvorgängen von Objekten mit besonders effektivem Aufbaumaterialeinsatz.

Ein erfindungsgemäßes Computerprogramm ist in eine Bereitstellungseinheit ladbar und weist Programmcodemittel auf, um alle Schritte eines erfindungsgemäßen Verfahrens zur Bereitstellung einer Aufbaumaterialverbrauchsinformation auszuführen, wenn das Computerprogramm auf der Bereitstellungseinheit ausgeführt wird.

Merkmale und Zweckmäßigkeiten der Erfindung werden nachfolgend anhand von Ausführungsbeispielen unter Bezugnahme auf die Zeichnungen beschrieben. Von den Figuren zeigen:
Fig. 1 ist eine Darstellung eines Beispiels einer erfindungsgemäßen generativen Schichtbauvorrichtung.
Fig. 2 ist eine Querschnittsansicht zur Veranschaulichung des Auftrags einer Pulverschicht in einem generativen Schichtbauverfahren.
Fig. 3 zeigt eine beispielhafte erfindungsgemäße Unterteilung der Fläche einer aufzutragenden Schicht in Teilbereiche und die Zuordnung von Wichtungsfaktoren zu den Teilbereichen.
Fig. 4 zeigt eine Draufsicht auf den Beschichtungsbereich in einem Fall, in dem das Baufeld eine vom Beschichtungsbereich abweichende Gestalt hat.
Fig. 5a und 5b dienen der Erläuterung des Einflusses der Lage eines zu verfestigenden Querschnitts im Baufeld auf den Pulververbrauch.
Fig. 6 zeigt eine beispielhafte Zuweisung von Wichtungsfaktoren für eine Bausituation, wie sie in den Fig. 5a und 5b dargestellt ist.
Fig. 7 ist eine Querschnittsansicht zur Veranschaulichung des Einflusses von Verfestigungsbereichen auf den Aufbaumaterialbedarf.
Fig. 8a und 8b zeigen eine beispielhafte Zuweisung von Wichtungsfaktoren für eine Bausituation, wie sie in den Fig. 5a und 5b dargestellt ist unter zusätzlicher Berücksichtigung von Verfestigungsvorgängen in vorangegangenen Schichten.
Fig. 9a und 9b zeigen eine beispielhafte Zuweisung von Wichtungsfaktoren zur Veranschaulichung des Einflusses der Orientierung eines herzustellenden Objekts auf den Aufbaumaterialbedarf.
Fig. 10 zeigt eine Draufsicht auf einen in aktueller Herstellung begriffenen Querschnitt eines herzustellenden Objekts zur Veranschaulichung eines möglichen Vorgehens bei der Simulation des tatsächlich verfestigten Bereichs.
Fig. 11 zeigt eine schematische Blockdarstellung zur Veranschaulichung eines Ausführungsbeispiels einer erfindungsgemäßen Bereitstellungseinheit.

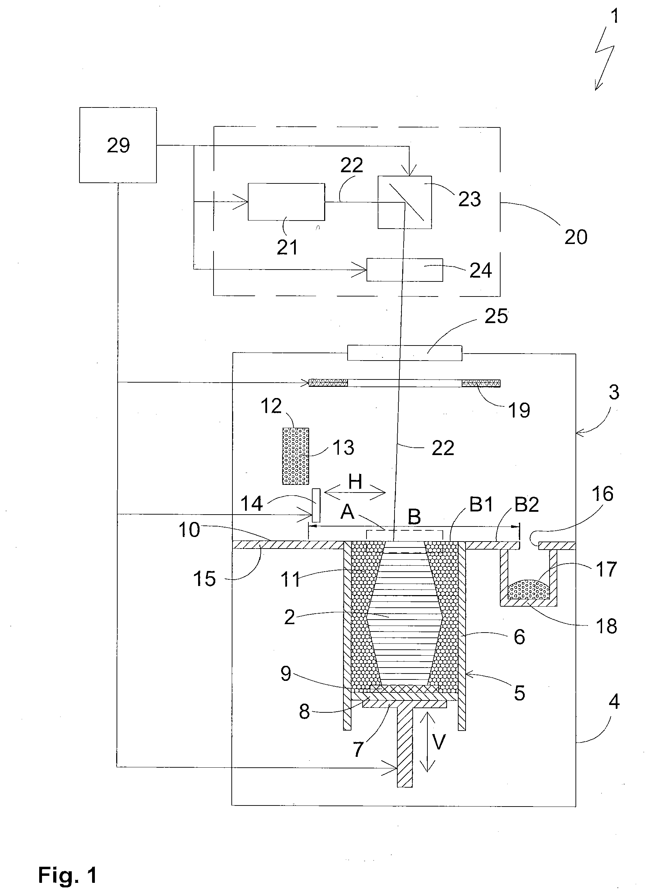

Im Folgenden wird mit Bezug auf Fig. 1 ein Beispiel einer für eine erfindungsgemäße generative Schichtbauvorrichtung 1 beschrieben. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer durch den oberen Rand der Wandung 6 definierten Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. Eine Arbeitsplatte 15, die den Behälter 5 allseitig umgibt und vorzugsweise von dem Behälter thermisch isoliert ist, ist so angeordnet, dass ihre obere Oberfläche in der Arbeitsebene 10 liegt. In der Arbeitsplatte 15 ist auf der dem Vorratsbehälter 12 gegenüberliegenden Seite ein Überlaufschlitz 16 angeordnet, durch den überschüssiges Pulver 17 in einen Überlaufbehälter 18 fallen kann. In der Prozesskammer ist ferner eine Strahlungsheizung 19 zum Heizen des auf die Arbeitsebene 10 aufgebrachten Aufbaumaterials 13 angeordnet.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über ein Einkoppelfenster 25, das in der Oberseite der Wandung 4 der Prozesskammer 3 angeordnet ist, auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 7 um eine Höhe abgesenkt, die der gewünschten Schichtdicke entspricht. Durch Verfahren des Beschichters 14 über die Arbeitsebene 10 wird dann eine Schicht des pulverförmigen Aufbaumaterials 13 aufgebracht. Dabei ist ein bestimmungsgemäßer Beschichtungsbereich B als der Bereich der Arbeitsebene 10 definiert, innerhalb dessen der Beschichter 14 bei bestimmungsgemäßer Benutzung in der Lage ist, Pulver aufzutragen, in dem also seine Beschichtungsfunktion möglich ist. Bei der in Fig. 1 dargestellten Lasersintervorrichtung 1 erstreckt sich der bestimmungsgemäße Beschichtungsbereich B von der Stelle, an der der Beschichter 14 pulverförmiges Aufbaumaterial von dem Vorratsbehälter 12 aufnimmt, bis zu dem Überlaufschlitz 16, durch den das dort noch in dem Beschichter 14 verbliebene überschüssige Pulver 17 in den Überlaufbehälter 18 fällt. Dahinter ist keine Beschichtungsfunktion mehr möglich.

Der bestimmungsgemäße Beschichtungsbereich B umfasst das Baufeld B1, also den Bereich der Arbeitsebene 10, der innerhalb der oberen Öffnung des Behälters 5 liegt, und einen das Baufeld B1 umgebenden Randbereich B2. Dabei ist das Baufeld B1 der Bereich, in dem das Objekt 2 aufgebaut werden kann und in dem die aufgebrachten und selektiv verfestigten Pulverschichten vor dem Aufbringen einer neuen Pulverschicht abgesenkt werden.

Die aufgebrachte Pulverschicht wird durch die Strahlungsheizung 19, die dazu ausgelegt ist, das gesamte Baufeld B1 zu beheizen, vorgeheizt. Auch ein Teil der Arbeitsplatte 15 wird von der Strahlungsheizung 19 beheizt. Zusätzlich kann die Arbeitsplatte 15 aber auch durch ein eigens an ihr angebrachtes (in der Figur nicht gezeigtes) Heizelement beheizt werden.

Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

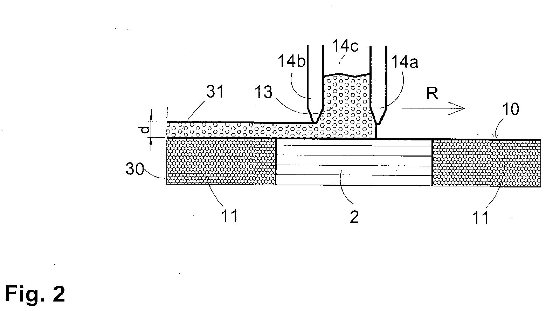

Fig. 2 zeigt schematisch vergrößert einen Ausschnitt A, der in Fig. 1 von einer gestrichelten Linie umrahmt ist.

Nach dem Aufbringen und Verfestigen einer Pulverschicht 30 ist der darin liegende verfestigte Teil des herzustellenden Objekts 2 von unverfestigt gebliebenem Pulver 11 umgeben. Auf diese zuvor aufgebrachte und selektiv verfestigte Pulverschicht 30 wird dann mittels einer Bewegung des Beschichters 14 in einer Beschichtungsrichtung R eine weitere Pulverschicht 31 des Aufbaumaterials 13 aufgetragen.

Wie in Fig. 2 gezeigt, enthält der Beschichter 14 eine Beschichtungseinheit mit einer in der Beschichtungsrichtung R vorne liegenden Klinge (vordere Klinge 14a) und einer in der Beschichtungsrichtung B hinten liegenden Klinge (hintere Klinge 14b). Diese beiden Klingen schließen einen Zwischenraum 14c in der Beschichtungsrichtung B und in der Gegenrichtung zur Beschichtungsrichtung zumindest teilweise ab. Dieser durch die beiden Klingen 14a, 14b begrenzte Zwischenraum 14c ist dazu ausgebildet, einen Vorrat an pulverförmigem Aufbaumaterial 13 aufzunehmen. Senkrecht zur Zeichnungsebene erstrecken sich die beiden Klingen 14a, 14b und damit auch der von ihnen begrenzte Zwischenraum 14c über die gesamte Breite des zu beschichtenden Bereichs.

Beim Verfahren des Beschichters 14 in der Beschichtungsrichtung R verbleibt ein Teil dieses pulverförmigen Aufbaumaterials 13 auf der unmittelbar vorangegangenen Schicht 30 und wird von der hinteren Klinge 14b zu einer gleichmäßigen dünnen Pulverschicht 31 der Dicke d ausgezogen. Die aufgebrachte Schichtdicke wird bestimmt durch den Höhenabstand zwischen der Unterkante der hinteren Klinge 14b und der zuvor aufgebrachten Schicht 30.

Zum Aufbringen der neuen Pulverschicht 31 fährt die Beschichtungseinheit 14a-c des Beschichters 14 zunächst zu dem Vorratsbehälter 12 und nimmt dort eine vorbestimmte Menge des pulverförmigen Aufbaumaterials 13 auf. Diese vorbestimmte Pulvermenge ist vorzugsweise größer als die Pulvermenge, die zum Auftragen einer Schicht des pulverförmigen Aufbaumaterials 13 benötigt wird. Dann fährt die Beschichtungseinheit 14a-c über die Arbeitsebene 10 und trägt die neue Pulverschicht 31 auf. Wenn die Beschichtungseinheit 14a-c den Überlaufschlitz 16 erreicht, fällt dort noch in dem Beschichter 14 verbliebenes überschüssiges Pulver 17 in den Überlaufbehälter 18.

Wie bereits in der Einleitung erwähnt wurde, werden die Kosten eines Herstellungsvorgangs mittels einer generativen Schichtbauvorrichtung sehr dadurch beeinflusst, wieviel Aufbaumaterial für den Herstellvorgang eingesetzt werden muss. In diesem Zusammenhang haben die Erfinder erkannt, dass der zu erwartende Materialverbrauch bei der Herstellung eines oder mehrerer Objekte von der Lage und Orientierung der Objekte im Bauraum abhängt. Um den zu erwartenden Pulverbedarf möglichst genau ermitteln zu können und die soeben geschilderte Abhängigkeit des Pulverbedarfs von Lage und Orientierung der herzustellenden Objekte berücksichtigen zu können, geht das erfinderische Verfahren zur Pulverbedarfsermittlung folgendermaßen vor:
Vor dem Auftrag einer Schicht eines Aufbaumaterials in einem generativen Schichtbauverfahren liegen alle Informationen, also insbesondere die Schichtdicke und die Lage, Ausdehnung und Orientierung der zu verfestigenden Bereiche, für diese Schicht und die vorangehenden Schichten in einem Datensatz vor.

Der Aufbaumaterialbedarf für eine Schicht hängt in erster Näherung von der Fläche des bestimmungsgemäßen Beschichtungsbereichs B sowie der Dicke d der neu aufzutragenden Schicht ab. Eine beim Schichtauftrag entstehende Verdichtung des Pulvermaterials, die dazu führt, dass Pulver mit einer größeren Schichtdicke aufgetragen werden muss als der beabsichtigten Dicke d ist dem Fachmann bekannt und wird hier nicht im Detail erläutert. Ob solch eine Verdichtung beim Schichtauftrag berücksichtigt wird oder nicht, beeinflusst nicht die Anwendbarkeit der vorliegenden Erfindung.

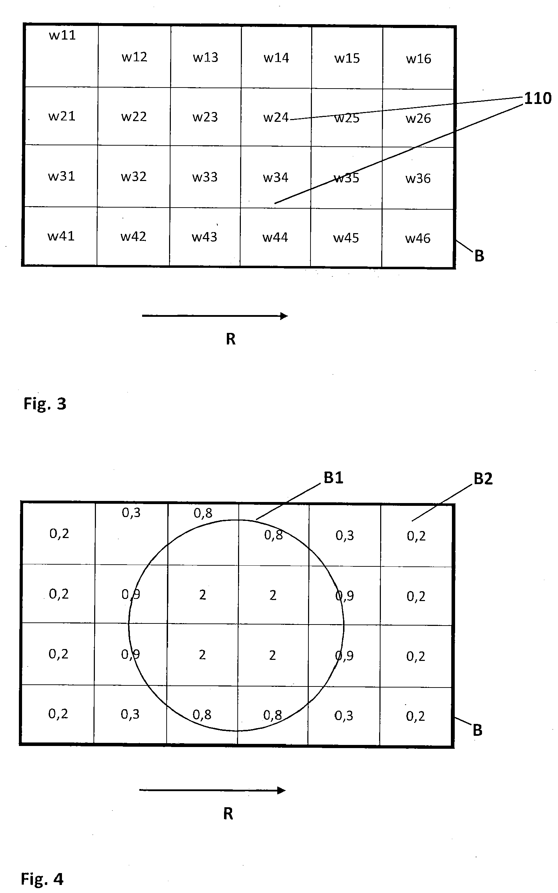

Gemäß der Erfindung wird der Pulverbedarf für eine Schicht dadurch in genauerer Weise ermittelt, dass die Fläche der aufzutragenden Schicht, also insbesondere der bestimmungsgemäße Beschichtungsbereich B, in Teilbereiche unterteilt, und diesen Teilbereichen werden Wichtungsfaktoren zugewiesen, die zum Ausdruck bringen, wie hoch der Pulverbedarf für einen Teilbereich ist. Das Vorgehen wird nachfolgend unter Bezugnahme auf Fig. 3 erläutert:
Fig. 3 zeigt eine Draufsicht auf den bestimmungsgemäßen Beschichtungsbereich B. Ein Pfeil R deutet die Beschichtungsrichtung an, also die Richtung, in der sich ein Beschichter 14 zum Auftrag einer Pulverschicht über den Beschichtungsbereich B bewegt. Man erkennt, dass der Beschichtungsbereich in 4x6 Teilbereiche 110 unterteilt ist. Jedem der Teilbereiche 110 ist ein Wichtungsfaktor wᵢⱼ zugeordnet, der den Pulverbedarf bei einem Pulverauftrag in diesem Bereich zum Ausdruck bringt. Erfindungsgemäß wird dabei angenommen, dass es einen Normpulverbedarf pro Einheitsfläche gibt, der anhand der oben beschriebenen ersten Näherung unter Berücksichtigung der Schichtdicke d ermittelt werden kann und abhängig vom verwendeten Aufbaumaterial ist. Einem Teilbereich 110 in der Größe der Einheitsfläche könnte also beispielsweise ein Wichtungsfaktor mit dem Wert 1 zugewiesen werden. Die Wichtungsfaktor wᵢⱼ könnten dann beispielsweise umso größer gewählt werden, je größer die Flächen de ihnen jeweils zugeordneten Teilbereiche 110 sind. In der Fig. 3 würde solch ein Vorgehen aber noch nicht zu unterschiedlichen Wichtungsfaktoren wᵢⱼ führen, da die Flächen aller Teilbereiche 110 gleich groß gewählt sind.

Durch die Einführung der Wichtungsfaktoren kann der Pulverbedarf für den Auftrag einer Schicht dadurch ermittelt werden, dass die Wichtungsfaktoren aller Teilbereiche 110 aufsummiert werden und nachfolgend die Summe mit dem Normpulverbedarf pro Einheitsfläche multipliziert wird. Das erhaltene Ergebnis entspricht dann der für den Auftrag der aktuellen Schicht benötigten Pulvermenge oder ist zumindest zu dieser proportional.

Bei der Zuweisung der Wichtungsfaktoren zu den Teilbereichen 110 gibt es verschiedene Vorgehensweisen. Beispielhafte Kriterien, nach denen dabei vorgegangen werden kann, werden nachfolgend im Rahmen verschiedener Ausführungsbeispiele der Erfindung beschrieben. Jedes der Ausführungsbeispiele soll dabei nur ein Beispiel für ein mögliches Vorgehen beschreiben. Es ist dabei insbesondere auch möglich, die in den einzelnen Ausführungsbeispielen beschriebenen Vorgehensweisen zu kombinieren, um dadurch zu durch mehrere Kriterien bedingten (und somit ggf. verfeinerten, d.h. akkurateren) Wichtungsfaktoren zu gelangen. Weiterhin sind konkret gezeigte Zahlenwerte für die Wichtungsfaktoren nur Beispiele zur Erläuterung des Vorgehens. Im Einzelfall kann der Fachmann andere Zahlenwerte wählen, je nachdem welche Bedeutung er den unterschiedlichen Einflussfaktoren auf den Aufbaumaterialbedarf zukommen lassen will. Insbesondere erheben die Beispiele für Einflussfaktoren auf den Aufbaumaterialbedarf nicht den Anspruch auf Vollständigkeit. Die Zuweisung von Wichtungsfaktoren für die Aufbaumaterialbedarfsermittlung gemäß der Erfindung ist allgemein anwendbar, also auch in Fällen, in denen hier nicht beschriebene weitere Einflussgrößen auf den Aufbaumaterialbedarf berücksichtigt werden sollen.

### Erstes Ausführungsbeispiel

Bei dem ersten Ausführungsbeispiel wird durch die Zuweisung von Wichtungsfaktoren berücksichtigt, dass innerhalb des bestimmungsgemäßen Beschichtungsbereichs B der Pulververbrauch innerhalb des Baufelds B1 höher sein wird als in dem das Baufeld B1 umgebenden Randbereich B2. Der Grund hierfür ist, dass innerhalb des Baufeldes vor dem Aufbringen einer Pulverschicht der Träger 7 abgesenkt wurde. In Fig. 4 ist der unterschiedliche Pulverbedarf für das Baufeld B1 und den umgebenden Bereich B2 durch unterschiedliche Wichtungsfaktoren berücksichtigt. Man erkennt zum Beispiel, dass die höchsten Wichtungsfaktoren im Innern des Baufelds zu finden sind und jene Teilbereiche 110, die nur teilweise das Baufeld B1 überdecken, zwar Wichtungsfaktoren aufweisen, die gegenüber jenen im Bereich um das Baufeld B1 herum erhöht sind, jedoch geringere Werte haben als jene für Teilbereiche 110, die vollständig innerhalb des Baufelds B1 liegen. Insbesondere erkennt man in der Figur auch, dass der Pulverbedarf in Beschichtungsrichtung R für die vier dargestellten Zeilen unterschiedlich ist, wie sich auf einfache Weise durch Aufsummieren der Wichtungsfaktoren in einer Zeile ergibt. Dies bringt zum Ausdruck, dass jene Bereiche des Beschichters, die nur geringe Flächenbereiche des Baufelds B1 überfahren, auch weniger Pulver bevorraten müssen.

### Zweites Ausführungsbeispiel

Erfindungsgemäß wurde erkannt, dass sich Aufbaumaterial auch dadurch einsparen lässt, dass nur ein Teil des bestimmungsgemäß vom Beschichter 14 zu überfahrenden Beschichtungsbereichs B tatsächlich überfahren wird. Solch ein Vorgehen kann nützlich sein, wenn die herzustellenden Objekte nicht das gesamte Baufeld ausfüllen. In solch einem Fall muss also eine Schicht nicht innerhalb des gesamten Baufelds aufgetragen werden.

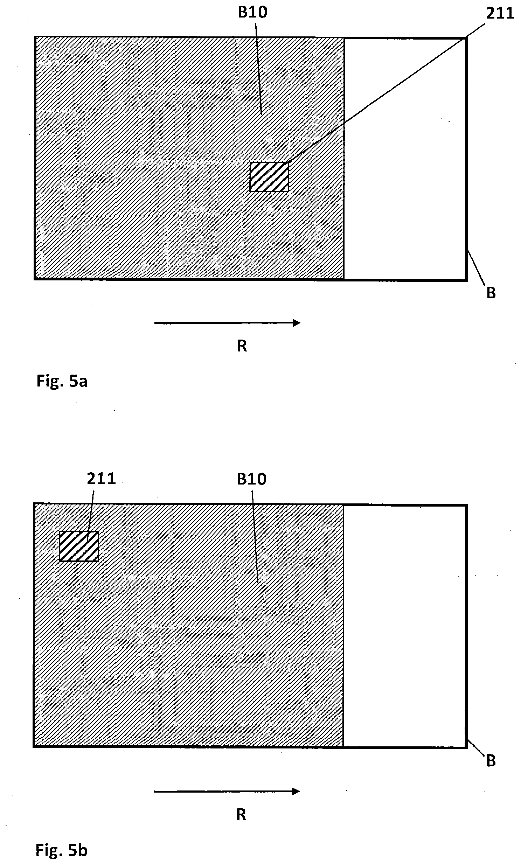

Zur Veranschaulichung des Vorgehens zeigt Fig. 5a eine Draufsicht auf den bestimmungsgemäßen Beschichtungsbereich B. Wiederum ist die Beschichtungsrichtung mit dem Buchstaben R und einem Pfeil angegeben. Das Bezugszeichen 211 bezeichnet den Querschnitt eines herzustellenden Objekts, bei welchem es sich im Beispiel der Fig. 5a um ein turmartiges Objekt mit einer Querschnittsfläche handelt, die deutlich geringer ist als die Fläche des bestimmungsgemäßen Beschichtungsbereichs und des beispielsweise rechteckigen Baufelds B1 (letzteres ist nicht dargestellt). Bei solchen Bausituationen hängt der Pulverbedarf stark von der Lage des Objektes innerhalb des Beschichtungsbereichs ab, wie durch einen Vergleich der Fig. 5a und 5b ersichtlich ist. Fig. 5b ist dabei analog zur Fig. 5a, lediglich die Lage des Querschnitts 211 ist entgegen der Beschichtungsrichtung R verschoben. Eine ebenfalls vorhandene Verschiebung senkrecht zur Beschichtungsrichtung ist für die Erläuterung unbeachtlich.

Wird das Aufbaumaterial nicht im gesamten bestimmungsgemäßen Beschichtungsbereich B aufgetragen, so bedeutet dies, der Vorrat im Beschichter 14 wird so bemessen, dass er vor der Ankunft des Beschichters am Ende des bestimmungsgemäßen Beschichtungsbereichs B (in Fig. 5a und 5b rechts) zur Neige gegangen ist. Die Erfinder haben dabei festgestellt, dass beim Zurneigegehen des Pulvervorrats im Beschichter 14 die aufgetragene Schichtdicke nicht plötzlich auf den Wert Null fallen kann, sondern allmählich abnehmen kann, so dass das Aufbaumaterial mit einer geringeren Dicke als der intendierten Schichtdicke d aufgetragen wird. Weiterhin kann das Aufbaumaterial unbeabsichtigt quer zur Beschichtungsrichtung ungleichmäßig verteilt sein, so dass an unterschiedlichen Positionen quer zur Beschichtungsrichung zu unterschiedlichen Zeitpunkten zur Neige geht. Daraus ergibt sich für den Fall der Fig. 5a, dass sichergestellt sein muss, dass im Beschichter noch genügend Pulvervorrat vorhanden istum das Pulver mit der vorgegebenen Schichtdicke d im Bereich des Querschnitts 211 aufzutragen, obwohl diese Stelle erst gegen Ende des Schichtauftragsvorgangs erreicht wird. In der Fig. 5b wird im Gegensatz dazu der Querschnitt 211 bereits zu Beginn des Beschichtungsvorgangs von dem Beschichter überfahren, so dass es keine negativen Auswirkungen hat, wenn gegen Ende des Beschichtungsvorgangs das Pulver zur Neige geht.

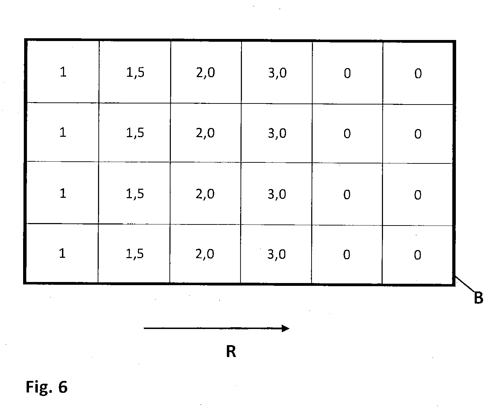

Allgemein kann man daher die Wichtungsfaktoren beispielsweise wie in Fig. 6 dargestellt festlegen. Fig. 6 zeigt wiederum eine Draufsicht auf den bestimmungsgemäßen Beschichtungsbereich B für eine Bausituation, wie sie in den Fig. 5a und 5b dargestellt ist. Man erkennt, dass in den beiden rechten Spalten in Fig. 6 den Teilbereichen 110 die Wichtungsfaktoren 0 zugeordnet sind, was zum Ausdruck bringt, dass in diesem Bereich kein Pulver aufgetragen werden müsste. Weiterhin erkennt man in den ersten vier Spalten eine streng monotone Zunahme der Wichtungsfaktoren von links nach rechts. Durch solch eine Zuweisung von Wichtungsfaktoren wird dem Umstand Rechnung getragen, dass zur Sicherstellung eines hinreichenden Schichtauftrags an den Stellen, die zu einem späteren Zeitpunkt während der Bewegung des Beschichters beschichtet werden, genügend Pulver im Beschichter vorhanden sein muss.

Letztendlich ergibt sich, dass bei Anordnung des herzustellenden Objekts in der Weise, wie sie in Fig. 5a dargestellt ist, der Pulververbrauch höher sein wird als bei Anordnung des Objekts in der Weise, wie sie in Fig. 5b dargestellt ist.

### Drittes Ausführungsbeispiel

Das dritte Ausführungsbeispiel veranschaulicht einen weiteren Aspekt, der bei der Zuweisung von Wichtungsfaktoren zu den einzelnen Teilbereichen 110, in welche der bestimmungsgemäße Beschichtungsbereich B unterteilt wurde, berücksichtigt werden kann.

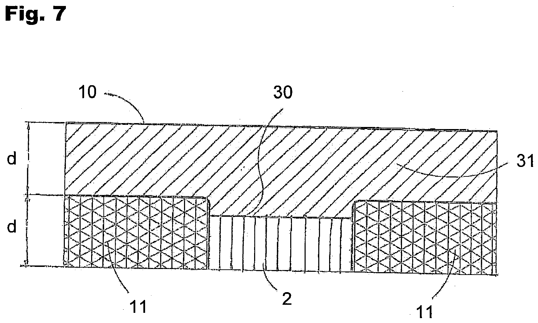

Fig. 7 zeigt eine Querschnittsansicht des oberen Teils des Objekts 2 während seiner Herstellung. Man erkennt eine neu aufgetragene Aufbaumaterialschicht 31 oberhalb einer im Bauprozess vorangegangenen Schicht bestehend aus unverfestigtem Aufbaumaterial 11, welches einen in dieser vorangegangenen Schicht verfestigten Abschnitt im Bereich des Objekts 2 seitlich flankiert.

Wie man in Fig. 7 deutlich erkennt, liegt die Oberfläche des Objekts 2 unterhalb jener des unverfestigt gebliebenen Pulvers 11, so dass an dieser Stelle eine Einsenkung ausgebildet ist. Die Ursache hierfür ist die Materialverdichtung durch den Aufschmelz- bzw. Erweichungsvorgang des Aufbaumaterials beim Verfestigen.

Wie man ebenfalls in Fig. 7 erkennt, muss im Bereich der Einsenkung mehr Pulver aufgetragen werden. An dieser Stelle ist die Dicke der neuen Pulverschicht größer als die vorbestimmte Schichtdicke d. Bei der Ermittlung des Aufbaumaterialbedarfs für die neu aufgetragene Schicht 31 kann durch geeignete Zuweisung der Wichtungsfaktoren der zusätzliche Pulverbedarf oberhalb von bereits verfestigten Bereichen bei der Pulverbedarfsermittlung berücksichtigt werden.

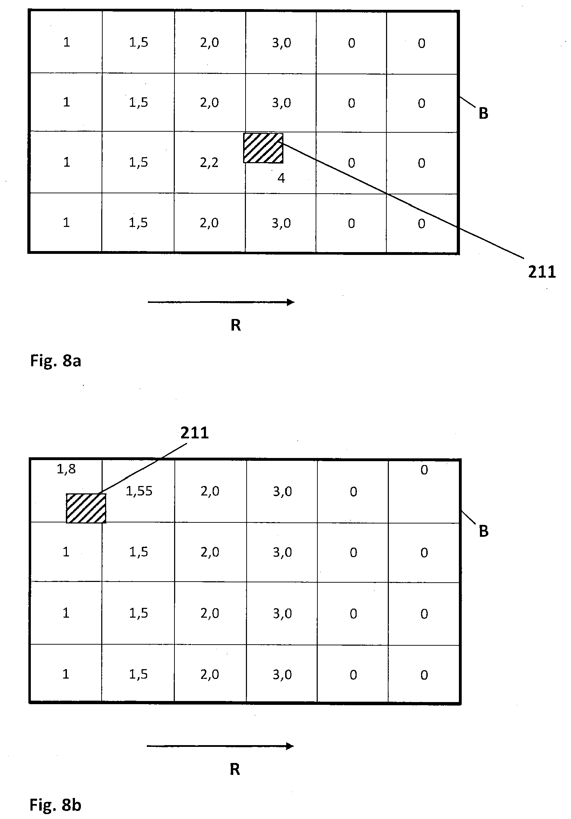

Hierzu wird auf die Schichtdaten der vorangegangenen Schicht zugegriffen, aus denen die Lage, Größe und Orientierung der in der vorangegangenen Schicht zu verfestigenden Bereiche hervorgehen. Fig. 8a und 8b zeigen beispielhaft eine Zuweisung von Wichtungsfaktoren unter Berücksichtigung der für einen in der vorangehenden Schicht bereits verfestigten Querschnitt 211 benötigten Zusatzpulvermenge. Die Objektquerschnitte 211 in Fig. 8a und 8b sind analog zu den in Fig. 5a und 5b dargestellten Objektquerschnitten gewählt. Wie man in Fig. 8a und 8b erkennt, ist der Wichtungsfaktor in jenen Teilbereichen 110, die einen Teil des Objektquerschnitts überdecken, je nach überdeckter Fläche erhöht. Der Wichtungsfaktor beispielsweise in der ersten Zeile und der ersten Spalte in Fig. 8b ist um einen deutlich größeren Wert gegenüber der zweiten Zeile erhöht als der Wichtungsfaktor in der ersten Zeile und der zweiten Spalte. Man erkennt wiederum, dass den Teilbereichen, die in Fig. 8a den Objektquerschnitt überdecken, ein deutlich höherer Wichtungsfaktor zugewiesen ist als den Teilbereichen, die in Fig. 8b den Objektquerschnitt überdecken. Dies bringt wiederum den Einfluss des Beschichtungszeitpunkts während des Beschichtungsvorgangs auf den Pulverbedarf zum Ausdruck. Natürlich kann aber der zusätzliche Pulverbedarf für einen bereits verfestigten Bereich in der vorangegangenen Schicht auch unabhängig von der Lage des Bereichs durch die Zuweisung geeigneter Wichtungsfaktoren berücksichtigt werden.

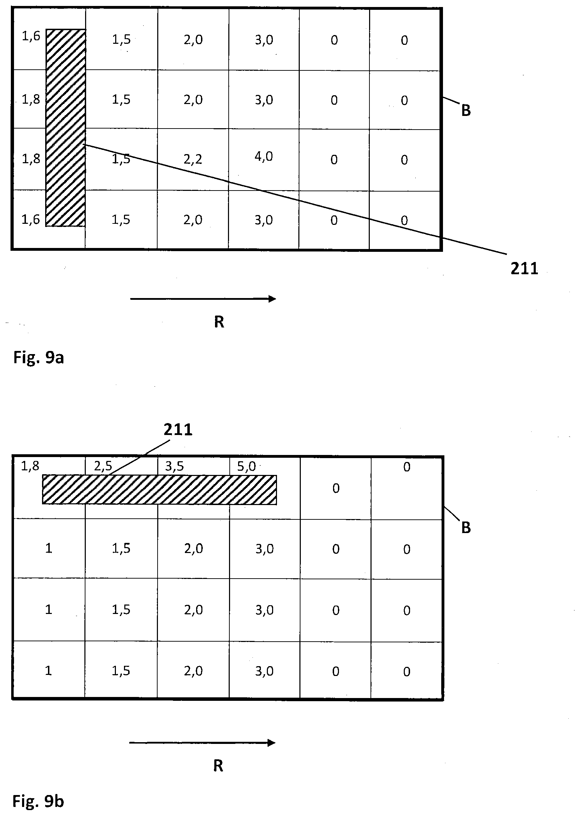

Fig. 9a und 9b veranschaulichen, wie die Orientierung eines bereits verfestigten Objektquerschnitts innerhalb des Beschichtungsbereichs den Pulverbedarf beeinflusst. Da in Fig. 9b der bereits verfestigte Objektquerschnitt sich in Bereiche erstreckt, die erst relativ spät während des Beschichtungsvorgangs beschichtet werden, ist der Pulverbedarf in Fig. 9b höher als bei der Situation in Fig. 9a, was leicht dadurch erkennbar ist, dass man die Wichtungsfaktoren jener vier Teilbereiche, die jeweils den verfestigten Bereich überdecken, addiert. Während sich in Fig. 9a ein Wert von 6,8 ergibt, erhält man in Fig. 9b einen Wert von 12,8.

Es sei noch bemerkt, dass eine Berücksichtigung des Zusatzpulverbedarfs für bereits verfestigte Bereiche nicht zwangsläufig gekoppelt ist an die gleichzeitige Berücksichtigung der Lage und Orientierung der bereits verfestigten Bereiche innerhalb des Beschichtungsbereichs B. Vielmehr kann eine Zuweisung von Wichtungsfaktoren auch einzig und allein unter Berücksichtigung der Ausdehnung von bereits verfestigten Bereichen geschehen.

Obwohl bislang stets von der Berücksichtigung von bereits verfestigten Bereichen in der vorangegangenen Schicht die Rede war, ist die Erfindung nicht hierauf beschränkt. Einsenkungen in der unmittelbar vorangehenden Schicht, auf welche eine neue Pulverschicht aufgetragen wird, für die der Pulverbedarf ermittelt wird, können auch das Resultat von Verfestigungsvorgängen in noch weiter unterhalb gelegenen Schichten als der unmittelbar vorangegangenen Schicht sein. Da die Daten aller Schichten die entsprechende Information über die zu verfestigenden Bereiche enthalten, kann entsprechend auch die Lage, Ausdehnung und Orientierung von verfestigten Bereichen in mehreren vorangegangenen Schichten berücksichtigt werden.

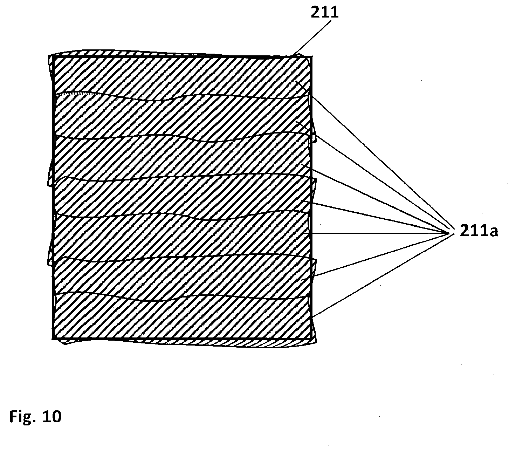

Bei einer Abwandlung der dritten Ausführungsform kann die Genauigkeit bei der Pulverbedarfsermittlung noch erhöht werden, indem berücksichtigt wird, dass die Ausdehnung eines zu verfestigenden Bereichs in den Daten einer Schicht geringfügig von der Ausdehnung des tatsächlich verfestigten Bereichs abweicht. Diese Abweichung resultiert daraus, dass die Ränder des zu verfestigenden Bereichs bei der Verfestigung sich geringfügig verschieben, was u.a. von der Wärmeableitung am Rande des zu verfestigenden Bereichs abhängen kann. Weiterhin kann eine solche "Ausfransung" eines zu verfestigenden Bereichs am Rande von der Art und Weise abhängen, in der der zu verfestigende Bereich mit einem Energiestrahl abgefahren wird. Dies ist in Fig. 10 veranschaulicht, welche Bestrahlungsvektoren 211a ("Hatch-Vektoren") darstellt, mit denen der zu verfestigende Querschnitt 211 beim Herstellungsvorgang überstrichen wird. Man erkennt, dass die Kontur des Bereichs 211 nicht exakt nachgebildet ist. Schließlich kann bei der Ermittlung des Pulverbedarfs auch noch der Verdichtungsgrad beim jeweils während der Herstellung gewählten Verfestigungsvorgang berücksichtigt werden.

Eine Möglichkeit, durch eine Simulation die Ausdehnung eines verfestigten Bereichs in einer Schicht zu ermitteln, besteht darin, zunächst ein Bild des zu verfestigenden Bereichs zu errechnen und anschließend dieses Bild bei der Simulation durch Bestrahlungsvektoren (wie die Bestrahlungsvektoren 211a in Fig. 10) zu überdecken. Auf diese Weise wird der Verfestigungsvorgang mit seiner Auswirkung auf die Ausdehnung des zu verfestigenden Bereichs simuliert. Natürlich sind auch andere Vorgehensweisen möglich, beispielsweise die Multiplikation der Fläche eines zu verfestigenden Bereichs mit einem Skalierungsfaktor, welcher beispielsweise einen Wert größer als Eins aufweisen kann. Auf der Grundlage der mittels Simulation erhaltenen Ausdehnung eines zu verfestigenden Bereichs in einer vorangegangenen Schicht kann dann der zusätzliche Pulverbedarf für solch einen Bereich ermittelt werden und ein Wichtungsfaktor für einen Teilbereich 110 in der Schicht oberhalb solch eines Bereichs festgelegt werden.

Beim obigen Vorgehen ist es insbesondere möglich, für die Errechnung eines Bildes die tatsächlich zu erwartende Strahlaushärtebreite nach Bestrahlung des Aufbaumaterials mit dem Energiestrahl zu berücksichtigen anstelle der verwendeten Breite des Energiestrahls während des Verfestigungsvorgangs. Ferner kann sogar berücksichtigt werden, dass sich das Aushärteverhalten ändern kann, wenn ein zu verfestigender Bereich mehrmals bestrahlt wird, also insbesondere mehrmals mit einem Energiestrahl überstrichen wird. Für die Simulation der Verfestigung können vorteilhaft auch Vorversuche zum Verfestigungsverhalten des zu verwendenden Aufbaumaterials durchgeführt werden, um beispielsweise die zu erwartende Strahlaushärtebreite bei der zu verwendenden generativen Schichtbauvorrichtung zu ermitteln.

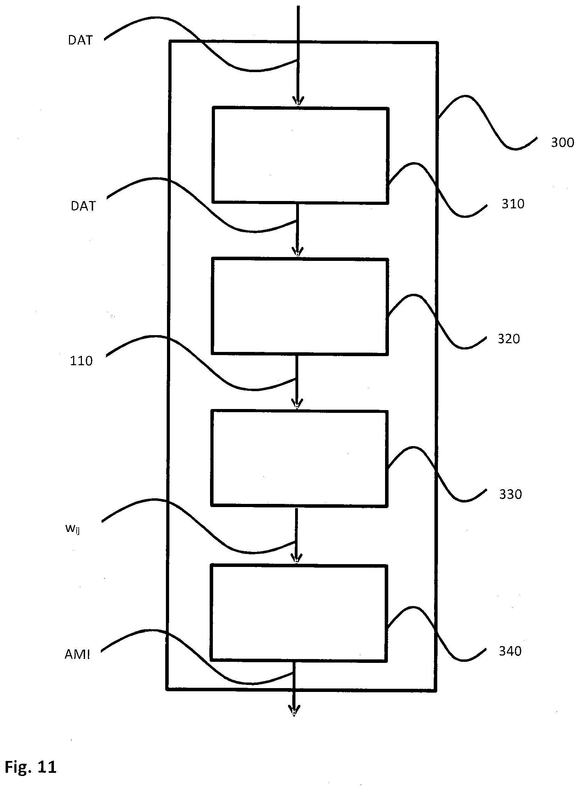

Fig. 11 zeigt eine schematische Blockdarstellung eines Ausführungsbeispiels einer erfindungsgemäßen Bereitstellungseinheit 300 zur Bereitstellung einer Aufbaumaterialverbrauchsinformation im Rahmen einer Herstellung mindestens eines dreidimensionalen Objekts mittels einer generativen Schichtbauvorrichtung 1. In der generativen Schichtbauvorrichtung 1 wird (wie anhand von Fig. 1 beispielhaft ausgeführt) das mindestens eine Objekt 2 Schicht für Schicht hergestellt durch schichtweises Auftragen einer Schicht eines pulverförmigen Aufbaumaterials mittels des Beschichters 14 auf den Träger 7 bzw. eine bereits vorhandene Schicht des Aufbaumaterials und das Aufbaumaterial stellenweise verfestigt mittels Wärmezufuhr zu den Stellen der Schicht, die dem Querschnitt des Objekts 2 entsprechen, indem die Schicht selektiv mit Energiestrahlung 22 abgetastet wird. Die Bereitstellungseinheit 300 umfasst eine Zugriffseinheit 310, eine Unterteilungseinheit 320, eine Zuordnungseinheit 330 und eine Festlegungseinheit 340. Schnittstellen wie Eingangs-, Ausgangs- oder interne Übergabeschnittstellen der Bereitstellungseinheit 300 sind der Übersichtlichkeit halber weggelassen.

Die Zugriffseinheit 310 greift auf die Daten DAT einer aufzutragenden Schicht in einem ersten Datensatz zu, in dem für jede während der Herstellung aufzutragende Schicht gekennzeichnet ist, ob in dieser Schicht eine selektive Verfestigung von Aufbaumaterial stattfinden soll und, falls dies der Fall ist, an welchen Stellen in dieser Schicht Aufbaumaterial verfestigt werden soll. Die Unterteilungseinheit 320 unterteilt die Fläche der aufzutragenden Schicht in Teilbereiche 110 und die Zuordnungseinheit 330 ordnet den Teilbereichen 110 Wichtungsfaktoren wᵢⱼ zu. Die Festlegungseinheit 340 legt darauf basierend eine dem Beschichter 14 zuzuführenden Menge des Aufbaumaterials für den Auftrag der Schicht fest. Auf Basis dieser Informationen ermittelt die Bereitstellungseinheit 300 die Menge des Aufbaumaterials anhand der den einzelnen Teilbereichen 110 zugeordneten Wichtungsfaktoren wᵢⱼ und stellt diese als Aufbaumaterialverbrauchsinformation AMI bereit. Die einzelnen Schritte dieses Prozederes sind anhand der obigen Ausführungsbeispiele anhand der Figuren 1 bis 10 bereits umfassend beschrieben.

Obwohl in den Figuren stets der bestimmungsgemäße Beschichtungsbereich in gleich große rechteckige bzw. quadratische Teilbereiche 110 unterteilt wurde, kann natürlich für die einzelnen Teilbereiche auch eine andere Geometrie gewählt werden. Erfindungsgemäß sind im Prinzip alle mathematisch möglichen lückenlosen Überdeckungen möglich. In der Mathematik wird für solch eine lückenlose Überdeckung in der Regel der Begriff "Parkettierung" bzw. "Tessellation" gewählt. Insbesondere kann man also Dreiecke, Vierecke, Fünfecke, Sechsecke oder Kombinationen aus den genannten für die Unterteilung des Beschichtungsbereichs B in Teilbereiche 110 verwenden. Es ist sogar nicht einmal notwendig, die Flächen aller Teilbereiche so zu wählen, dass nur eine begrenzte Anzahl von Formen vorhanden ist bzw. alle Teilflächen gleich groß sind. Im Prinzip reicht es, den Beschichtungsbereich B durch Teilflächen 110 so aufzuteilen, dass eine lückenlose Überdeckung vorliegt, wobei die Teilbereiche nicht notwendig Polygone sein müssen.

Es ist für die Pulverbedarfsermittlung vorteilhaft, wenn eine Unterteilung des Beschichtungsbereichs B in Zeilen und Spalten durchgeführt wird. Im einfachsten Fall liegt eine Unterteilung in lediglich zwei Teilbereiche (zwei Spalten oder zwei Zeilen) vor. Je weiter unterteilt der Beschichtungsbereich B jedoch ist (beispielsweise in mindestens drei Zeilen und mindestens drei Spalten), desto genauer kann der Pulverbedarf für eine Schicht ermittelt werden. Insbesondere können die Teilbereiche 110 als sich in Beschichtungsrichtung über die gesamte Ausdehnung des Beschichtungsbereichs B erstreckende Streifen gewählt werden. Für eine eher grobe Pulverbedarfsermittlung kann in solch einem Fall einfach der Streifen ermittelt werden, für den der Pulverbedarf maximal sein wird und anschließend bei der Pulverbedarfsermittlung dieser maximale Pulverbedarf für alle Streifen angenommen wird. In diesem Falle würde allen Streifen der gleiche Wichtungsfaktor zugewiesen werden. Das Verfahren lässt sich noch verfeinern, wenn eine Aufteilung des Beschichtungsbereichs B in Zeilen und Spalten erfolgt, anschließend in jeder Zeile parallel zur Beschichtungsrichtung der Pulverbedarf ermittelt wird und nachfolgend in allen Zeilen den jeweiligen Teilbereichen die gleichen Wichtungsfaktoren zugewiesen werden wie in der Zeile, für die ein maximaler Pulverbedarf ermittelt wurde.

Die Erfindung ist weiterhin auch insbesondere in Fällen anwendbar, in denen der Beschichter durch Unterteilung quer zur Beschichtungsrichtung in der Lage ist, quer zur Beschichtungsrichtung unterschiedliche große Pulvermengen für einen Schichtauftrag zu bevorraten. Weiterhin ist die Erfindung auch ohne Weiteres in Fällen anwendbar, in denen mehrere unterschiedliche Aufbaumaterialien während der Herstellung mittels einer generativen Schichtbauvorrichtung zum Einsatz kommen. In solchen Fällen wird einfach für jede Aufbaumaterialart separat eine Unterteilung des Beschichtungsbereichs und Zuweisung von Wichtungsfaktoren durchgeführt.

Das erfindungsgemäße Verfahren lässt sich wie oben beschrieben in allen Abwandlungen auf einer Pulverbedarfsinformations-Bereitstellungseinheit durchführen, bei welcher es sich im Wesentlichen um eine Datenprozessorvorrichtung handelt. Solch eine Datenprozessorvorrichtung kann ein eingebettetes System sein, welches in einer generativen Schichtbauvorrichtung vorhanden ist, ein Steuerrechner für eine generative Schichtbauvorrichtung oder jedes andere Computersystem (beispielsweise ein Computer, auf dem mittels einer generativen Schichtbauvorrichtung herzustellende Objekte entworfen werden). Zweckmäßigerweise wird das erfindungsgemäße Verfahren zur Bereitstellung einer Aufbaumaterialverbrauchsinformation als Computerprogramm implementiert. Von dem Verfahren benötigte Informationen können entweder den Daten für ein mittels eines generativen Schichtbauverfahrens herzustellendes Objekt entnommen werden oder aber von einem Nutzer über eine Eingabemaske eingegeben werden. Wird das erfindungsgemäße Verfahren von einem Designer für herzustellende Objekte durchgeführt, so kann bereits während des Designs ermittelt werden, wie viele Objekte parallel in einem Bauvorgang für eine optimale Verwendung des Aufbaumaterials hergestellt werden können. Natürlich bringt das erfindungsgemäße Verfahren aber den größten Vorteil für den Bediener einer generativen Schichtbauvorrichtung. Mit dem erfindungsgemäßen Verfahren, welches eine Aufbaumaterialverbrauchsinformation für einen Herstellvorgang von Objekten und damit eine Kosteninformation für den Herstellvorgang liefert, kann der gesamte Herstellvorgang durch geschickte Wahl der Lage und Orientierung der herzustellenden Objekte im Bauraum einer generativen Schichtbauvorrichtung im Hinblick auf die Herstellkosten optimiert werden. Zweckmäßigerweise ist das Verfahren zur Bereitstellung einer Aufbaumaterialverbrauchsinformation in ein Verfahren zur Bereitstellung eines Steuerbefehlssatzes für eine generative Schichtbauvorrichtung eingebettet, da in diesem Falle ein Steuerbefehlssatz für eine generative Schichtbauvorrichtung für die Herstellung von Objekten auf dieser Vorrichtung bereitgestellt wird, der im Hinblick auf die Herstellungskosten, also den Pulververbrauch, optimiert ist.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials angewendet werden.

Der Laser kann beispielsweise einen Gas- oder Festkörperlaser, eine Laserdiode oder jede andere Art von Laser umfassen. Allgemein kann jede Einrichtung verwendet werden, mit der Stahlungsenergie selektiv auf eine Schicht des Aufbaumaterials aufgebracht werden kann. Anstelle eines Lasers können beispielsweise eine Mehrzahl von Lasern, eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden. Schließlich ist sogar eine Anwendung der Erfindung in Fällen möglich, in denen die generative Schichtbauvorrichtung eine 3D-Druckvorrichtung ist, in der zum Verfestigen des Aufbaumaterials auf dieses ein Kleber aufgespritzt wird. Allgemein bezieht sich die Erfindung auf das Herstellen eines Objekts mittels schichtweisen Aufbringens und selektiven Verfestigens eines pulverförmigen Aufbaumaterials unabhängig von der Art und Weise, in der das Aufbaumaterial verfestigt wird.

Als Aufbaumaterial können verschiedene Arten von Pulver verwendet werden, insbesondere Metallpulver, Kunststoffpulver, Keramikpulver, Sand, gefüllte oder gemischte Pulver.

## Patentansprüche

1. Verfahren zur Bereitstellung einer Aufbaumaterialverbrauchsinformation (AMI) im Rahmen einer Herstellung mindestens eines dreidimensionalen Objekts (2) mittels einer generativen Schichtbauvorrichtung (1), wobei in der generativen Schichtbauvorrichtung (1) das mindestens eine Objekt (2) Schicht für Schicht hergestellt wird durch schichtweises Auftragen einer Schicht eines pulverförmigen Aufbaumaterials (13) mittels eines Beschichters (14) auf einen Träger (7) oder eine bereits vorhandene Schicht des Aufbaumaterials und stellenweises Verfestigen des Aufbaumaterials mittels Wärmezufuhr zu den Stellen der Schicht, die dem Querschnitt eines Objekts (2) entsprechen, indem die Schicht selektiv mit Energiestrahlung (22) abgetastet wird, wobei das Verfahren mindestens die folgenden Schritte aufweist:
einen Schritt des Zugreifens auf die Daten (DAT) einer aufzutragenden Schicht in einem ersten Datensatz, in dem für jede während der Herstellung aufzutragende Schicht gekennzeichnet ist, ob in dieser Schicht eine selektive Verfestigung von Aufbaumaterial stattfinden soll und, falls dies der Fall ist, an welchen Stellen in dieser Schicht Aufbaumaterial verfestigt werden soll,
einen Schritt des Unterteilens der Fläche (B) der aufzutragenden Schicht in Teilbereiche (110),
einen Schritt des Zuordnens von Wichtungsfaktoren (wᵢⱼ) zu den Teilbereichen (110),
einen Schritt des Festlegens einer dem Beschichter (14) zuzuführenden Menge des Aufbaumaterials für den Auftrag der Schicht,
wobei die Menge des Aufbaumaterials anhand der einzelnen Teilbereichen (110) zugeordneten Wichtungsfaktoren (wᵢⱼ) ermittelt und als Aufbaumaterialverbrauchsinformation (AMI) bereitgestellt wird,
wobei die Teilbereiche die Fläche (B) der aufzutragenden Schicht in Gestalt einer Parkettierung lückenlos überdecken.

2. Verfahren gemäß Anspruch 1, wobei die Menge des Aufbaumaterials in Abhängigkeit von einer Summe der Wichtungsfaktoren (wᵢⱼ) über alle Teilbereiche (110) festgelegt wird.

3. Verfahren nach einem der vorangehenden Ansprüche, bei dem die Teilbereiche (110) die Fläche (B) der aufzutragenden Schicht in Form einer Matrix mit Zeilen und Spalten abdecken.

4. Verfahren nach einem der vorangehenden Ansprüche, bei dem die den Teilbereichen (110) zugeordneten Wichtungsfaktoren (wᵢⱼ) in Bewegungsrichtung (R) des Beschichters (14) monoton, bevorzugt streng monoton, zunehmend zugeordnet werden.

5. Verfahren nach einem der vorangehenden Ansprüche,
wobei, die Lage und Form von zu verfestigenden Bereichen in mindestens einer vorangehenden Schicht, bevorzugt der unmittelbar vorangehenden Schicht ermittelt wird und,
wenn es in mindestens einer vorangehenden Schicht, bevorzugt der unmittelbar vorangehenden Schicht, einen verfestigten Bereich gibt, jenen Teilbereichen (110) der aufzutragenden Schicht, die zumindest teilweise oberhalb eines zu verfestigenden Bereichs liegen, ein höherer Wichtungsfaktor (wᵢⱼ) zugeordnet wird als es der Fall wäre, wenn der Teilbereich (110) nicht zumindest teilweise oberhalb eines zu verfestigenden Bereichs liegen würde.

6. Verfahren nach Anspruch 5, bei dem die Teilbereiche (110) so angeordnet sind, dass die Fläche (B) der aufzutragenden Schicht in parallel zur Bewegungsrichtung (R) des Beschichters (14) verlaufende Zeilen und senkrecht dazu verlaufende Spalten unterteilt ist,
wobei in jeder Zeile die Summe der Wichtungsfaktoren (wᵢⱼ) über alle Teilbereiche (110) in dieser Zeile berechnet wird und nachfolgend die Zeile ermittelt wird, für die die Summe maximal ist,
wobei allen Teilbereichen (110) in einer Spalte der Wert des Wichtungsfaktors (wᵢⱼ) jenes Teilbereichs (110) in dieser Spalte zugeordnet wird, der in der Zeile mit der maximalen Summe liegt.

7. Verfahren nach Anspruch 5 oder 6, bei dem die Lage und Form von verfestigten Bereichen in mindestens einer vorangehenden Schicht, bevorzugt der unmittelbar vorangehenden Schicht, in Bezug auf einen Zustand nach ihrer Verfestigung mit Energiestrahlung simuliert wird und für die Zuordnung von Wichtungsfaktoren (wᵢⱼ) zu Teilbereichen (110) berücksichtigt wird, ob ein Teilbereich (110) zumindest teilweise oberhalb eines von der Simulation gelieferten verfestigten Bereichs liegt.

8. Verfahren nach Anspruch 7, bei dem,
bei der Simulation von Lage und Form von verfestigten Bereichen in mindestens einer vorangehenden Schicht, bevorzugt der unmittelbar vorangehenden Schicht in Bezug auf einen Zustand nach ihrer Verfestigung ein Bild eines verfestigten Bereichs errechnet wird.

9. Verfahren nach einem der Ansprüche 1 bis 8, bei dem die Teilbereiche (110) parallel zur Bewegungsrichtung (R) des Beschichters (14) entlang der gesamten aufzutragenden Schicht verlaufende Streifen sind.

10. Verfahren nach einem der Ansprüche 1 bis 9, bei dem bei der Zuordnung von Werten der Wichtungsfaktoren (wᵢⱼ) zu den Teilbereichen (110) die Art des verwendeten Aufbaumaterials (13) berücksichtigt wird.

11. Verfahren zur Bereitstellung eines Steuerbefehlssatzes zur Herstellung mindestens eines dreidimensionalen Objekts (2) mittels einer generativen Schichtbauvorrichtung (1), wobei in der generativen Schichtbauvorrichtung (1) das mindestens eine Objekt (2) Schicht für Schicht hergestellt wird durch schichtweises Auftragen einer Schicht eines pulverförmigen Aufbaumaterials (13) mittels eines Beschichters (14) auf einen Träger (7) oder eine bereits vorhandene Schicht des Aufbaumaterials und stellenweises Verfestigen des Aufbaumaterials (13) mittels Wärmezufuhr zu den Stellen der Schicht, die dem Querschnitt eines Objekts (2) entsprechen, indem die Schicht selektiv mit Energiestrahlung (22) abgetastet wird, wobei das Verfahren mindestens die folgenden Schritte aufweist:
Bereitstellung der Aufbaumaterialverbrauchsinformation (AMI) mittels eines Verfahrens gemäß einem der vorangehenden Ansprüche,
Erzeugen des Steuerbefehlssatzes für die generative Schichtbauvorrichtung (1), wobei in dem Steuerbefehlssatz für mindestens eine, bevorzugt mehrere, besonders bevorzugt jede aufzutragende Schicht die dem Beschichter für den Auftrag dieser Schicht zuzuführende Pulvermenge festgelegt ist.

12. Verfahren zur Herstellung mindestens eines dreidimensionalen Objekts (2) mittels einer generativen Schichtbauvorrichtung (1), die durch einen mit einem Verfahren nach Anspruch 11 erzeugten Steuerbefehlssatz gesteuert wird,
wobei in der generativen Schichtbauvorrichtung (1) das mindestens eine Objekt (2) Schicht für Schicht hergestellt wird durch schichtweises Auftragen einer Schicht eines pulverförmigen Aufbaumaterials (13) mittels eines Beschichters (14) auf einen Träger (7) oder eine bereits vorhandene Schicht des Aufbaumaterials und stellenweises Verfestigen des Aufbaumaterials mittels Wärmezufuhr zu den Stellen der Schicht, die dem Querschnitt eines Objekts (2) entsprechen, indem die Schicht selektiv mit Energiestrahlung (22) abgetastet wird und das Verfahren mindestens die folgenden Schritte aufweist:
einen Pulverauftragsschritt des Bereitstellens einer Schicht eines pulverförmigen Aufbaumaterials (13) auf einem Träger (7) oder einer bereits vorhandenen Schicht des pulverförmigen Aufbaumaterials,
einen Verfestigungsschritt des Verfestigens der aufgetragenen Schicht mittels elektromagnetischer Strahlung oder Teilchenstrahlung, bei dem die Strahlung auf alle zu verfestigenden Stellen der Schicht einwirkt, so dass die Pulverkörner an diesen Stellen durch die durch die Strahlung eingebrachte Wärmeenergie teilweise oder vollständig aufgeschmolzen werden, so dass sie nach einer Abkühlung miteinander verbunden als Festkörper vorliegen,
wobei der Pulverauftragsschritt und der Verfestigungsschritt nacheinander so oft wiederholt werden, bis alle Querschnitte des mindestens einen herzustellenden dreidimensionalen Objekts verfestigt sind.

13. Bereitstellungseinheit (300) zur Bereitstellung einer Aufbaumaterialverbrauchsinformation (AMI) im Rahmen einer Herstellung mindestens eines dreidimensionalen Objekts (2) mittels einer generativen Schichtbauvorrichtung (1), wobei in der generativen Schichtbauvorrichtung (1) das mindestens eine Objekt (2) Schicht für Schicht hergestellt wird durch schichtweises Auftragen einer Schicht eines pulverförmigen Aufbaumaterials (13) mittels eines Beschichters (14) auf einen Träger (7) oder eine bereits vorhandene Schicht des Aufbaumaterials und stellenweises Verfestigen des Aufbaumaterials mittels Wärmezufuhr zu den Stellen der Schicht, die dem Querschnitt eines Objekts (2) entsprechen, indem die Schicht selektiv mit Energiestrahlung (22) abgetastet wird, wobei die Bereitstellungseinheit mindestens aufweist:
eine Zugriffseinheit (310), ausgebildet zum Zugreifen auf die Daten (DAT) einer aufzutragenden Schicht in einem ersten Datensatz, in dem für jede während der Herstellung aufzutragende Schicht gekennzeichnet ist, ob in dieser Schicht eine selektive Verfestigung von Aufbaumaterial stattfinden soll und, falls dies der Fall ist, an welchen Stellen in dieser Schicht Aufbaumaterial verfestigt werden soll,
eine Unterteilungseinheit (320), die im Betrieb die Fläche der aufzutragenden Schicht in Teilbereiche (110) unterteilt,
eine Zuordnungseinheit (330), die im Betrieb Wichtungsfaktoren (wᵢⱼ) zu den Teilbereichen (110) zuordnet,
eine Festlegungseinheit (330) zum Festlegen einer dem Beschichter (14) zuzuführenden Menge des Aufbaumaterials für den Auftrag der Schicht,
wobei die Bereitstellungseinheit ausgebildet ist, die Menge des Aufbaumaterials anhand der einzelnen Teilbereichen (110) zugeordneten Wichtungsfaktoren (wᵢⱼ) zu ermitteln und als Aufbaumaterialverbrauchsinformation (AMI) bereitzustellen,
wobei die Unterteilungseinheit (320) ausgebildet ist, die Fläche der aufzutragenden Schicht so in Teilbereiche zu unterteilen, dass die Teilbereiche die Fläche (B) der aufzutragenden Schicht in Gestalt einer Parkettierung lückenlos überdecken.

14. Generative Schichtbauvorrichtung zur Herstellung mindestens eines dreidimensionalen Objektes (2) aus einem pulverförmigen Aufbaumaterial Schicht für Schicht durch schichtweises Auftragen einer Schicht eines pulverförmigen Aufbaumaterials mittels eines Beschichters (14) auf einen Träger (7) oder eine bereits vorhandene Schicht des Aufbaumaterials und stellenweises Verfestigen des Aufbaumaterials mittels Wärmezufuhr zu den Stellen der Schicht, die dem Querschnitt eines Objekts (2) entsprechen, indem die Schicht selektiv mit Energiestrahlung (22) abgetastet wird, wobei die Vorrichtung aufweist:
einen Träger (7) zum Tragen des zu bildenden Objektes (2);
einen Beschichter (14) zum Aufbringen einer Schicht des pulverförmigen Aufbaumaterials (13) auf die Oberfläche des Trägers (7) oder eine bereits vorhandene Schicht,
eine Bestrahlungsvorrichtung (21, 23), die elektromagnetische Strahlung (22) oder Teilchenstrahlung emittiert und in der Lage ist, alle in einer Schicht zu verfestigenden Stellen so zu bestrahlen, dass die Pulverkörner an diesen Stellen durch die durch die Strahlung eingebrachte Wärmeenergie teilweise oder vollständig aufgeschmolzen werden, so dass sie nach einer Abkühlung miteinander verbunden als Festkörper vorliegen, wobei die Schichtbauvorrichtung eine Bereitstellungseinheit nach Anspruch 13 umfasst.

15. Computerprogramm, das in eine Bereitstellungseinheit (300) ladbar ist, mit Programmcodemitteln, um alle Schritte eines Verfahrens gemäß einem der Ansprüche 1 bis 10 auszuführen, wenn das Computerprogramm auf der Bereitstellungseinheit (300) ausgeführt wird.

## Claims

1. A method of providing a building material consumption information (AMI) in the context of a manufacturing of at least one three-dimensional object (2) by means of a layer-wise additive manufacturing device (1), wherein in the layer-wise additive manufacturing device (1) the at least one object (2) is manufactured layer by layer by applying a layer of a building material (13) in powder form layer-wise on a support (7) or an already existing layer of the building material by means of a recoater (14) and by solidifying the building material in parts by a supply of heat to those positions of the layer that correspond to the cross-section of an object (2) by selectively scanning the layer with energy radiation (22), wherein the method comprises at least the following steps:
a step of accessing data (DAT) of a layer to be applied in a first dataset, in which first dataset for each layer to be applied during the manufacturing it is indicated, whether in such layer there shall be a selective solidification of building material and, if that is the case, at which positions in such layer building material shall be solidified,
a step of dividing the area (B) of the layer to be applied into subareas (110),
a step of assigning weighting factors (wᵢⱼ) to the subareas (110),
a step of specifying an amount of building material to be supplied to the recoater (14) for the application of the layer,
wherein the amount of building material is determined based on the weighting factors (wᵢⱼ) assigned to the individual subareas (110) and is provided as building material consumption information (AMI)
wherein the subareas are covering the area (B) of the layer to be applied without gaps in the form of a tessellation.

2. The method according to claim 1, in which the amount of building material is specified depending on a sum of the weighting factors (wᵢⱼ) of all subareas (110).

3. The method according to one of the preceding claims, in which the subareas (110) cover the area (B) of the layer to be applied by forming an array of rows and columns.

4. The method according to one of the preceding claims, in which the weighting factors (wᵢⱼ) assigned to the subareas (110) are assigned such that they are monotonically increasing, preferably strictly monotonically increasing, in the direction of movement (R) of the recoater (14).

5. The method according to one of the preceding claims, in which
the positions and shapes of regions to be solidified in at least one previous layer, preferably the immediately preceding layer, are determined, and
in case in at least one previous layer, preferably the immediately preceding layer, there exists a solidified region, those subareas (110) of the layer to be applied that are located at least partially above of a solidified region are assigned a higher weighting factor (wᵢⱼ) as compared to the case, in which a subarea (110) is not located at least partially above of a solidified region.

6. The method according to claim 5, in which the subareas (110) are arranged such that the area (B) of the layer to be applied is divided into rows running in parallel to the direction of movement (R) of the recoater (14) and columns running orthogonally thereto,
wherein in each row the sum of the weighting factors (wᵢⱼ) of all subareas (110) in that row is calculated and afterwards the row having the maximum sum is determined,
wherein all subareas (110) in a column are assigned a value of the weighting factor (wᵢⱼ) of such subarea (110) in this column that lies in the row having the maximum sum.

7. The method according to claim 5 or 6, in which the positions and shapes of solidified regions in at least one previous layer, preferably the immediately preceding layer, are simulated with respect to a state after a solidification thereof by means of energy radiation, wherein for the assignment of weighting factors (wᵢⱼ) to subareas (110) it is taken into consideration, whether a subarea (110) lies at least partially above of a solidified region provided by the simulation.

8. The method according to claim 7, in which
in the simulation of positions and shapes of solidified regions in at least one previous layer, preferably the immediately preceding layer, an image of a solidified region is computed referring to a state after a solidification of such region.

9. The method according to one of claims 1 to 8, in which the subareas (110) are stripes running in parallel to the direction of movement (R) of the recoater (14) across the whole layer to be applied.

10. The method according to one of claims 1 to 9, in which in the assignment of values of weighting factors (wᵢⱼ) to the subareas (110) the type of building material (13) that is used is taken into consideration.

11. A method of providing a control command set for the manufacturing of at least one three-dimensional object (2) by means of a layer-wise additive manufacturing device (1), wherein in the layer-wise additive manufacturing device (1) the at least one object (2) is manufactured layer by layer by applying a layer of a building material (13) in powder form layer-wise on a support (7) or an already existing layer of the building material by means of a recoater (14) and by solidifying the building material in parts by a supply of heat to those positions of the layer that correspond to the cross-section of an object (2) by selectively scanning the layer with energy radiation (22), wherein the method comprises at least the following steps:
providing the building material consumption information (AMI) by means of a method according to one of the preceding claims,
generating the control command set for the layer-wise additive manufacturing device (1), wherein in the control command set for at least one, preferably several, especially preferably for each, layer to be applied the amount of powder to be supplied to the recoater for the application of this layer is specified.

12. A method of manufacturing at least one three-dimensional object (2) by means of a layer-wise additive manufacturing device (1) that is controlled by a control command set generated by means of a method according to claim 11,
wherein in the layer-wise additive manufacturing device (1) the at least one object (2) is manufactured layer by layer by applying a layer of a building material (13) in powder form layer-wise on a support (7) or an already existing layer of the building material by means of a recoater (14) and by solidifying the building material in parts by a supply of heat to those positions of the layer that correspond to the cross-section of an object (2) by selectively scanning the layer with energy radiation (22) and the method comprises at least the following steps:
a powder application step of providing a layer of a building material (13) in powder form on a support (7) or an already existing layer of the building material in powder form,
a solidification step of solidifying the applied layer by means of electromagnetic radiation or particle radiation, in which solidification step the radiation acts on all positions of the layer to be solidified, so that the powder grains at these positions are partially or completely melted by the heat energy introduced by the radiation, so that after a cooling they exist connected to each other as solid state body,
wherein the powder application step and the solidification step are successively repeated until all cross-sections of the at least one three-dimensional object to be manufactured are solidified.

13. A provision unit (300) for providing a building material consumption information (AMI) in the context of a manufacturing of at least one three-dimensional object (2) by means of a layer-wise additive manufacturing device (1), wherein in the layer-wise additive manufacturing device (1) the at least one object (2) is manufactured layer by layer by applying a layer of a building material (13) in powder form layer-wise on a support (7) or an already existing layer of the building material by means of a recoater (14) and by solidifying the building material in parts by a supply of heat to those positions of the layer that correspond to the cross-section of an object (2) by selectively scanning the layer with energy radiation (22), wherein the provision unit comprises at least:
an access unit (310) designed to access the data (DAT) of a layer to be applied in a first dataset, in which first dataset for each layer to be applied during the manufacturing it is indicated, whether in such layer there shall be a selective solidification of building material and, if that is the case, at which positions in such layer building material shall be solidified,
a division unit (320), which in operation divides the area of the layer to be applied into subareas (110),
an assignment unit (330), which in operation assigns weighting factors (wᵢⱼ) to the subareas (110),
a specification unit (330) for specifying an amount of building material to be supplied to the recoater (14) for the application of the layer,
wherein the provision unit is designed to determine the amount of building material based on the weighting factors (wᵢⱼ) assigned to the individual subareas (110) and to provide the same as building material consumption information (AMI)
wherein the division unit (320) is designed to divide the area (B) of the layer to be applied into subareas such that the subareas are covering the area (B) of the layer to be applied without gaps in the form of a tessellation.

14. A layer-wise additive manufacturing device for manufacturing at least one three-dimensional object (2) from a building material in powder form layer by layer by applying a layer of a building material (13) in powder form layer-wise on a support (7) or an already existing layer of the building material by means of a recoater (14) and by solidifying the building material in parts by a supply of heat to those positions of the layer that correspond to the cross-section of an object (2) by selectively scanning the layer with energy radiation (22), wherein the device comprises:
a support (7) for supporting the object (2) to be formed;
a recoater (14) for applying a layer of the building material (13) in powder form on the surface of the support (7) or an already existing layer,
an irradiation device (21, 23) that emits electromagnetic radiation (22) or particle radiation and is able to irradiate all positions to be solidified in a layer such that the powder grains at these positions are melted partially or completely by the heat energy introduced by means of the radiation, so that after a cooling the powder grains at these positions exist connected to each other as solid state body, wherein the layer-wise additive manufacturing device comprises a provision unit according to claim 13.

15. Computer program that is able to be loaded into a provision unit (300) and has program code means for carrying out all steps of a method according to one of claims 1 to 10, when the computer program is executed in the provision unit (300).

## Revendications

1. Procédé destiné à mettre à disposition une information d'utilisation de matériau de construction (AMI) dans le cadre d'une fabrication d'au moins un objet (2) tridimensionnel au moyen d'un dispositif de construction par couches (1) génératif, dans lequel dans le dispositif de construction par couche (1) génératif le au moins un objet (2) est fabriqué couche par couche par application en couches successives d'une couche d'un matériau de construction (13) pulvérulent au moyen d'un enducteur (14) sur un support (7) ou une couche déjà en place du matériau de construction et par solidification par emplacements du matériau de construction au moyen d'un apport de chaleur vers les emplacements de la couche qui correspondent à la section transversale d'un objet (2), où la couche est sélectivement balayée avec un rayonnement énergétique (22), dans lequel le procédé présente au moins les étapes suivantes :
une étape d'accès aux données (DAT) d'une couche à appliquer dans un premier jeu de données dans lequel pour chaque couche à appliquer pendant la fabrication est signalé si dans cette couche une solidification sélective de matériau de construction doit avoir lieu et, si tel est le cas, en quels emplacements dans cette couche le matériau de construction doit être solidifié,
une étape de subdivision de la surface (B) de la couche à appliquer dans des zones partielles (110),
une étape d'attribution de facteurs de pondération (wᵢⱼ) aux zones partielles (110),
une étape de fixation d'une quantité du matériau de construction à amener à l'enducteur (14) pour l'application de la couche,
dans lequel la quantité du matériau de construction est déterminée en se fondant sur les facteurs de pondération (wᵢⱼ) attribués aux zones partielles (110) individuelles et mise à disposition en tant qu'information d'utilisation de matériau de construction (AMI),
dans lequel les zones partielles recouvrent, sans laisser de vide et sous la forme d'un pavage, la surface (B) de la couche à appliquer.

2. Procédé selon la revendication 1, dans lequel la quantité du matériau de construction est fixée en fonction d'une somme des facteurs de pondération (wᵢⱼ) de toutes les zones partielles (110).

3. Procédé selon l'une des revendications précédentes, pour lequel les zones partielles (110) recouvrent la surface (B) de la couche à appliquer sous la forme d'une matrice avec des cellules et des colonnes.

4. Procédé selon l'une des revendications précédentes, pour lequel les facteurs de pondération (wᵢⱼ) attribués aux zones partielles (110) sont attribués par ordre croissant, de façon monotone, de préférence strictement monotone, dans la direction de déplacement (R) de l'enducteur (14).

5. Procédé selon l'une des revendications précédentes,
dans lequel la position et forme de zones à solidifier est déterminée au moins dans une couche précédente, de préférence dans la couche immédiatement précédente et,
s'il existe une zone solidifiée au moins dans une couche précédente, de préférence dans la couche immédiatement précédente, un facteur de pondération (wᵢⱼ) supérieur est attribué aux zones partielles (110) de la couche à appliquer qui se trouvent au moins partiellement au-dessus d'une zone à solidifier, comme cela serait le cas si la zone partielle (110) ne se trouvait pas au moins partiellement au-dessus d'une zone à solidifier.

6. Procédé selon la revendication 5, pour lequel les zones partielles (110) sont agencées de telle sorte que la surface (B) de la couche à appliquer soit subdivisée en des lignes s'étendant en parallèle de la direction de déplacement (R) de l'enducteur (14) et en des colonnes s'étendant perpendiculairement à celles-ci,
dans lequel dans chaque ligne est calculée la somme des facteurs de pondération (wᵢⱼ) de toutes les zones partielles (110) dans cette ligne et ensuite est déterminée la ligne pour laquelle la somme est maximale,
dans lequel à toutes les zones partielles (110) dans une colonne est attribuée la valeur du facteur de pondération (wᵢⱼ) de la zone partielle (110) dans cette colonne qui se trouve dans la ligne avec la somme maximale.

7. Procédé selon la revendication 5 ou 6, pour lequel la position et forme de zones solidifiées est simulée au moins dans une couche précédente, de préférence dans la couche immédiatement précédente, en lien avec un état après leur solidification par un rayonnement énergétique, et pour l'attribution de facteurs de pondération (wᵢⱼ) à des zones partielles (110) est pris en considération le fait qu'une zone partielle (110) se trouve au moins partiellement au-dessus d'une zone solidifiée livrée par la simulation.

8. Procédé selon la revendication 7, pour lequel
lors de la simulation de position et forme de zones solidifiées au moins dans une couche précédente, une image d'une zone solidifiée est calculée en lien avec un état après leur solidification.

9. Procédé selon l'une des revendications 1 à 8, pour lequel les zones partielles (110) sont des bandes s'étendant en parallèle de la direction de déplacement (R) de l'enducteur (14) le long de l'ensemble de la couche à appliquer.

10. Procédé selon l'une des revendications 1 à 9, pour lequel, lors de l'attribution de valeurs des facteurs de pondération (wᵢⱼ) aux zones partielles (110), le type du matériau de construction (13) utilisé est pris en considération.

11. Procédé destiné à mettre à disposition un jeu d'instructions de commande pour la fabrication d'au moins un objet (2) tridimensionnel au moyen d'un dispositif de construction par couches (1) génératif, dans lequel dans le dispositif de construction par couche (1) génératif le au moins un objet (2) est fabriqué couche par couche par application en couches successives d'une couche d'un matériau de construction (13) pulvérulent au moyen d'un enducteur (14) sur un support (7) ou une couche déjà en place du matériau de construction et par solidification par emplacements du matériau de construction (13) au moyen d'un apport de chaleur vers les emplacements de la couche qui correspondent à la section transversale d'un objet (2), où la couche est sélectivement balayée avec un rayonnement énergétique (22), dans lequel le procédé présente au moins les étapes suivantes :
mise à disposition de l'information d'utilisation de matériau de construction (AMI) au moyen d'un procédé selon l'une des revendications précédentes,
génération du jeu d'instructions de commande pour le dispositif de construction par couches (1) génératif, dans lequel dans le jeu d'instructions de commande est fixée la quantité de poudre à amener à l'enducteur pour l'application de cette couche pour au moins une, de préférence plusieurs, plus particulièrement de préférence chaque couche à appliquer.

12. Procédé destiné à fabriquer au moins un objet (2) tridimensionnel au moyen d'un dispositif de construction par couches (1) génératif qui est commandé par un jeu d'instructions de commande générées par un procédé selon la revendication 11,
dans lequel dans le dispositif de construction par couches (1) génératif, le au moins un objet (2) est fabriqué couche par couche par application en couches successives d'une couche d'un matériau de construction (13) pulvérulent au moyen d'un enducteur (14) sur un support (7) ou une couche déjà en place du matériau de construction et par solidification par emplacements du matériau de construction au moyen d'un apport de chaleur vers les emplacements de la couche qui correspondent à la section transversale d'un objet (2), où la couche est sélectivement balayée avec un rayonnement énergétique (22) et le procédé présente au moins les étapes suivantes :
une étape d'application de poudre de la mise à disposition d'une couche d'un matériau de construction (13) pulvérulent sur un support (7) ou une couche déjà en place du matériau de construction pulvérulent,
une étape de solidification de la solidification de la couche appliquée au moyen d'un rayonnement électromagnétique ou d'un rayonnement de particules, pour lequel le rayonnement agit sur tous les emplacements à solidifier de la couche de sorte qu'en ces emplacements les grains de poudre soient partiellement ou complètement fondus par l'énergie thermique apportée par le rayonnement, de sorte qu'ils se présentent assemblés entre eux en tant que corps solide après un refroidissement,
dans lequel l'étape d'application de poudre et l'étape de solidification sont répétées l'une après l'autre jusqu'à ce que toutes les sections transversales du au moins un objet tridimensionnel à fabriquer soient solidifiées.

13. Unité de mise à disposition (300) destinée à mettre à disposition une information d'utilisation de matériau de construction (AMI) dans le cadre d'une fabrication d'au moins un objet (2) tridimensionnel au moyen d'un dispositif de construction par couches (1) génératif, dans lequel dans le dispositif de construction par couche (1) génératif le au moins un objet (2) est fabriqué couche par couche par application en couches successives d'une couche d'un matériau de construction (13) pulvérulent au moyen d'un enducteur (14) sur un support (7) ou une couche déjà en place du matériau de construction et par solidification par emplacements du matériau de construction au moyen d'un apport de chaleur vers les emplacements de la couche qui correspondent à la section transversale d'un objet (2), où la couche est sélectivement balayée avec un rayonnement énergétique (22), dans lequel l'unité de mise à disposition présente au moins :
une unité d'accès (310) conçue pour l'accès aux données (DAT) d'une couche à appliquer dans un premier jeu de données dans lequel pour chaque couche à appliquer pendant la fabrication est signalé si dans cette couche une solidification sélective de matériau de construction doit avoir lieu et, si tel est le cas, en quels emplacements dans cette couche le matériau de construction doit être solidifié,
une unité de subdivision (320) qui en fonctionnement subdivise la surface de la couche à appliquer en des zones partielles (110),
une unité d'attribution (330) qui en fonctionnement attribue des facteurs de pondération (wᵢⱼ) aux zones partielles (110),
une unité de fixation (330) pour fixer une quantité du matériau de construction à amener à l'enducteur (14) pour l'application de la couche,
dans lequel l'unité de mise à disposition est conçue pour déterminer la quantité du matériau de construction en se fondant sur les facteurs de pondération (wᵢⱼ) attribués aux zones partielles (110) individuelles et mettre à disposition ladite quantité en tant qu'information d'utilisation de matériau de construction (AMI),
dans lequel l'unité de subdivision (320) est conçue pour subdiviser la surface de la couche à appliquer en des zones partielles de telle sorte que les zones partielles recouvrent, sans laisser de vide et sous la forme d'un pavage, la surface (B) de la couche à appliquer.

14. Dispositif de construction par couches génératif destiné à fabriquer au moins un objet (2) tridimensionnel à partir d'un matériau de construction pulvérulent, couche par couche par application en couches successives d'une couche d'un matériau de construction pulvérulent au moyen d'un enducteur (14) sur un support (7) ou une couche déjà en place du matériau de construction et par solidification par emplacements du matériau de construction au moyen d'un apport de chaleur vers les emplacements de la couche qui correspondent à la section transversale d'un objet (2), où la couche est sélectivement balayée avec un rayonnement énergétique (22), dans lequel le dispositif présente :
un support (7) pour porter l'objet (2) à former ;
un enducteur (14) pour appliquer une couche du matériau de construction (13) pulvérulent sur la surface du support (7) ou d'une couche déjà en place,
un dispositif de rayonnement (21, 23) qui émet un rayonnement électromagnétique (22) ou un rayonnement de particules et est en mesure d'irradier tous les emplacements à solidifier dans une couche de sorte qu'en ces emplacements les grains de poudre soient partiellement ou complètement fondus par l'énergie thermique apportée par le rayonnement, de sorte qu'après un refroidissement ils se présentent assemblés entre eux en tant que corps solide, dans lequel le dispositif de construction par couches comprend une unité de mise à disposition selon la revendication 13.

15. Programme informatique chargeable dans une unité de mise à disposition (300), avec des moyens de code de programme pour exécuter toutes les étapes d'un procédé selon l'une des revendications 1 à 10 lorsque le programme informatique est exécuté sur l'unité de mise à disposition (300).
